(19) Europäisches Patentamt
European Patent Office
Office européen des brevets

(11) **EP 2 497 610 B1**

## (12) EUROPEAN PATENT SPECIFICATION

(45) Date of publication and mention
of the grant of the patent:
**22.10.2014   Bulletin 2014/43**

(51) Int Cl.:
**B25J 9/00** *(2006.01)*        **B62D 57/032** *(2006.01)*

(21) Application number: **11425057.4**

(22) Date of filing: **09.03.2011**

(54) **System for controlling a robotic device during walking, in particular for rehabilitation purposes, and corresponding robotic device**

System zur Steuerung einer Robotervorrichtung während des Gehens, insbesondere zu Rehabilitationszwecken, sowie zugehörige Robotervorrichtung

Système pour contrôler un dispositif robotique pendant la marche, en particulier à des fins de rééducation et dispositif robotique correspondant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.09.2012   Bulletin 2012/37**

(73) Proprietor: **Syco Di Hedvig Haberl & C. S.A.S.**
**Torino (IT)**

(72) Inventor: **Menga, Giuseppe**
**10090 Villarbasse (IT)**

(74) Representative: **Nannucci, Lorenzo et al**
**Studio Torta S.p.A.**
**Via Viotti, 9**
**10121 Torino (IT)**

(56) References cited:
**EP-A1- 2 238 894     US-B1- 7 190 141**

## Description

The present invention relates in general to a system for controlling a robotic device during walking, in particular a biped robot or an exoskeleton haptic device for use in lower limb rehabilitation, to which the following disclosure will make specific reference without however this implying any loss of generality.

Background art

As is known, rehabilitation is an important practice to assist an infirm patient to recover full or partial neuromuscular or muscular control of a part of the body, limb or organ, such as the arms or legs and related joints, like hips, knees, ankles, etc. It has long been shown that, even in patients who have lost the ability to autonomously perform movements, the execution of assisted movements of the part of the body to be rehabilitated allows to recover first a neural control and then a muscular control on that part of the body. For example, rehabilitation of the lower limbs is required for recovery of patients with post-stroke injuries or parkinsonian syndromes, in order to regain or improve posture control and postural equilibrium.

Rehabilitation requires in general execution of a number of repetitive physical exercises involving the affected limb, and assistance to the patient is needed during execution of these exercises, particularly at the early stages of rehabilitation (when the patient has little or no control of the affected part of the body). The rehabilitation protocol asks for preparatory postural exercises, first, to terminate with the complete walk.

Assistance to the patient during the rehabilitation exercises is customarily provided manually by one or more therapists; however, robotic devices have only recently been proposed to assist the therapists in the task of assisting the patients. In particular, exoskeleton robotic devices have been proposed as a promising solution for assisting patients during rehabilitation treatments. Exoskeleton devices, including supporting frames, constituted by segments connected by motorized joints to be coupled to the patient, have indeed the potentiality to offer a versatile solution to be used by the patient in the execution of different repetitive rehabilitation exercises. However, designing of such robotic devices poses a serious challenge in terms of their control system, especially as far as walking control is concerned, when postural equilibrium is to be maintained during the whole gait (constituted by the repetition of single and double stance phases).

So far, research in the field of exoskeleton devices has been focused mainly on strength augmentation in order to boost the performances of the wearer, for example for military or heavy work applications. These devices do not address the problem of providing patient support and postural equilibrium, since they imply the presence of an able-bodied wearer, and therefore are not useful for rehabilitation purposes.

Moreover, the few exoskeletons proposed have shown serious limitations and failed to address all the requirements and needs for patient recovery, among which: an accurate position control, in order to maintain the exoskeleton (and wearer) dynamically stable when constrained to follow a planned reference trajectory; a controlled patient "compliance" (i.e. the capability to control the resistance perceived by the patient to his/hers voluntary movements), in order to involve the patient in the rehabilitation exercises and tutoring the improvements in the patient abilities; and, either whenever dynamical exercises are performed or quiet standing is maintained, a controlled postural equilibrium, in order to interact with the patient for maintaining or timely regaining equilibrium and correcting any erroneous patient posture.

EP 2 238 894 A1, in the name of the same Applicant, discloses an exoskeleton haptic device, and the associated control system, which addresses many of the above issues and requirements; however, this device is not intended and designed for walking, but instead for maintaining a substantially fixed standing position. The allowed exercises, designed for the early stages of rehabilitation, are preparatory to the real gait and account for movements in the sagittal plane as in sit-to-stand exercises, and/or in the frontal plane by simulating the walk in a standing position, shifting the weight from one foot to the other and contemporaneously raising the free foot as in a step machine (i.e. a step machine sustaining the patient and embedding postural control).

The control system disclosed in the above patent application implements a closed loop position control to maintain or recover postural equilibrium, contemporaneously offering patient compliance through a mechanical admittance control. Admittance control offers a dynamic mapping from force to motion, where force information is obtained from bioelectrical signals, e.g. Electro-Miographic Signals - EMG, measured on proper pairs of antagonistic muscles of the legs of the patient.

In brief (reference is made entirely to the above published patent application for any further detail), the control system is based on two hierarchical feedback loops:

- an inner control loop, embedding admittance control in a position loop, which closes a feedback from exoskeleton joint positions and velocities; this control loop is solved by linearising the model of the joined exoskeleton and patient system and adopting a two degrees of freedom approach using Hinfinite multivariable robust control theory. The exoskeleton is compliant to the patient efforts, according to an imposed admittance driven by the patient EMG signals, in the neighborhood of a given "joint angle reference positions"; and

- an outer control loop, which closes a non linear feedback from measures performed on the Cartesian space (where the exoskeleton movements are defined in terms of x, y, z spatial coordinates and attitude angles), based on a (pseudo) inverse Jacobian, transferring coordinates of the Center of Gravity (COG) and feet-sole center of pressure (Zero Moment Point - ZMP), into corrections for the "joint angle reference positions" in the inner loop, in order to maintain or regain postural equilibrium.

The two degrees of freedom control (as discussed in I. M. Horowitz, Synthesis of Feedback Systems, Academic Press, 1963) of the joint angles allows to track in time, or to maintain a reference position, contemporaneously offering a compliance to the patient efforts, according to the assigned force admittance, in the neighborhood of this reference position. Hence, the exoskeleton joints are driven contemporaneously by two reference signals, often competing at the early stage of the rehabilitation therapy, and hopefully cooperating (this is the objective of the rehabilitation training) at the conclusion of the same therapy: force signals (measured by EMG signals), to which comply, and position to guarantee posture. The degree of tracking of each one of these two references is governed by the imposed admittance, chosen by the therapist at the different stages of the rehabilitation: a high admittance (i.e. soft mechanics) means that the exoskeleton is highly compliant and servoed to the patient efforts expressed by the EMG signals in the inner control loop; a low admittance (i.e. stiff mechanics), on the contrary, strongly constrains the patient and answers primarily to postural equilibrium requirements of the outer control loop. In the first case, the system contributes, cooperating with, to the efforts of the patient; in the second case, it behaves as an autonomous biped robot were the efforts of the patient are treated as disturbances. In both cases, the outer control loop sustains the patient against gravity and helps the patient to maintain equilibrium during her/his exercises, by correcting the position references, tracked in the inner control loop. Postural equilibrium is also enhanced, when needed, by dynamically reducing the admittance (increasing the stiffness) of the response, when the boundaries of the equilibrium are reached (thus inhibiting a patient erroneous posture).

Although being efficient for controlling exercises during early stages of the rehabilitation, as previously underlined, this system does not offer any solution to the problem of controlling a walking biped robotic device.

US 7,190,141 B1 discloses an exoskeleton device, which may be used for rehabilitation purposes and is adapted to fit the lower extremities of a patient during rehabilitation. The exoskeleton device has actuators affixed to the patient, which are controllable by a control unit to provide controlled motion to at least one of the joints of the patient. The control unit operates based on the sliding-mode control theory.

The aim of the present invention is to extend the results of the above referenced previous patent application, overcoming the limitations of known solutions, and offering an efficient control during walking, still maintaining the postural equilibrium enhancement and possible compliance with respect to the patient.

This aim is achieved by the present invention in that it relates to a system for controlling a robotic device, and to a related robotic device, as defined in the appended claims.

For a better understanding of the present invention, preferred embodiments, which are intended purely by way of example and are not to be construed as limiting, are disclosed with reference to the attached drawings, wherein:

- Figure 1 is a schematic representation of a robotic device, in particular an exoskeleton haptic device, and of a related control system, according to an embodiment of the present disclosure;
- Figures 2a, 2b show the dynamical model of the multi-body of the robotic device of Figure 1, respectively in the sagittal plane and in the frontal plane;
- Figures 3-22 show plots related to the response of the control system, during a simulated test; and
- Figure 23 shows the general block diagram of the control system for the robotic device.

## Structure of the robotic device

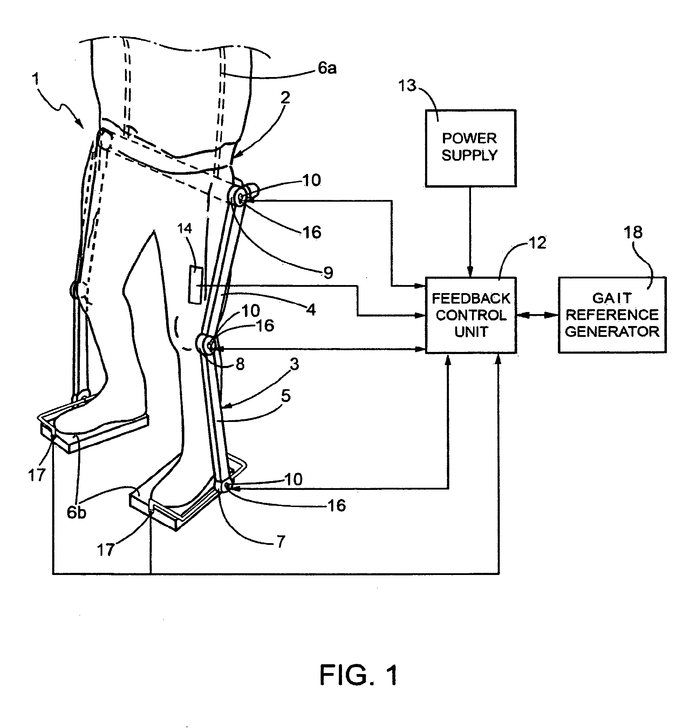

As shown in Figure 1, an embodiment of the present invention provides a robotic device 1, in the form of an exoskeleton haptic device designed for rehabilitation of the lower limbs.

The robotic device 1 is adapted to be worn by a patient 2 undergoing a rehabilitation treatment and comprises a frame structure 3 (shown schematically), to be coupled to the trunk and lower limbs of the patient.

The frame structure 3 includes: an upper segment 4, coupled to the thigh of the patient 2 and extending substantially parallel to the femur; a lower segment 5 coupled to the leg of the patient and extending substantially parallel to the tibia; and a back support element 6a coupled to the trunk of the patient 2. The lower segment 5 is coupled to a foot rest 6b, supporting the foot and sole of the patient, via an ankle joint 7, and to the upper segment 4 via a knee joint 8; the upper segment 4 ends at a hip joint 9, connected to the back support of the trunk. The ankle, knee and hip joints 7, 8, 9 allow the relative movement between the foot rest 6b, lower segment 5, upper segment 4 and back support, and are arranged respectively at the ankles, knees and hips of the patient 2; in particular, in this embodiment, the ankle and hip joints 7, 9 have two mechanical degrees of freedom, for rotations in the sagittal and frontal plane, while the knee joint 8 has a single mechanical degree of freedom, for rotation in the sagittal plane. Actuators, e.g. electric motors 10, are coupled to the ankle, knee and hip joints 7, 8, 9 (in particular, to some or all of these joints, since not necessarily all joints are motorized), and are operable to control their movements in the sagittal and/or frontal planes.

A control unit 12 is coupled to the robotic device 1 and implements a control algorithm for driving the electric motors 10 at the various joints, thus controlling their angular rotation, and accordingly the exoskeleton movements in the Cartesian space (defined by three orthogonal axes x, y, z of an external reference system). Preferably, the control unit 12 is implemented by a processing unit (such as a microprocessor, a DSP unit, or a similar unit provided with processing and computing capabilities), executing a suitable set of software instructions.

The control unit 12 is supplied by a power supply unit 13 (e.g. including rechargeable batteries) and receives at its input: bioelectrical signals, in particular EMG (Electromyographic) signals (more specifically surface EMG signal, i.e. detected on the skin surface), indicative of the patient intention, direction and strength of movement, from bioelectric sensors 14 coupled to the patient lower limbs and placed on the muscles involved in lower limb movements (Figure 1, for reasons of simplicity of depiction, shows only one sensor, placed on the thigh); position and velocity signals from position/velocity sensors 16, detecting joint angles at the ankle, knee and hip joints 7, 8, 9; reaction force signals from reaction force sensors 17 (e.g. load cells), positioned at the exoskeleton foot rests 6b and configured to detect the reaction forces imparted by the ground and the center of these reaction forces; and, during gait, the coordinates of the free (or swinging) foot, and body center of mass, from suitable sensors, such as ultrasound sensors, external visual sensors or inertial sensors (not shown).

The control unit 12 processes the above input signals and, based on the implemented control algorithms, outputs suitable driving commands for the electric motors 10, in particular indicative of the torque that is to be applied to the ankle, knee and hip joints 7, 8, 9, in order to cause their angular movement.

Advantageously, the control unit 12 and the power supply unit 13 are designed to be light-weight and to be carried by the patient; for example, suitable electronics circuitry implementing the control unit 12 is housed in a belt around the waist of the patient.

The control unit 12 is also coupled to a reference-generation block 18, which is configured to generate reference trajectories for controlling the gait, based on few parameters and simple function (e.g. sine and cosine functions), as will be discussed in detail in the following. An operator, e.g. a physiotherapist, may interact with the reference-generation block 18, via a suitable interface.

Before discussing in detail the control algorithms implemented by the control unit 12, some general considerations are made concerning the general issues of gait control.

Introduction to gait control

Controlling the gait, from a biped robotic point of view, accounts for the following technical aspects:

(a) controlling a multi-body dynamical system switching periodically between the two phases of the gait: the single and the double stance; in particular, for each stride of the gait, two double stance phases are interleaved by two single stance phases, one on each leg. The dynamical behavior of the multi-body system driven by joint torques and reaction forces/torques is given by a system of second order non-linear differential equations, usually known in the art as forward dynamics (see for example, B. Siciliano, O. Khatib, "Springer Handbook of Robotics", 2008, chapter 16, section 3). This mechanical system is subject to non-holonomic constraints resulting from ground reaction forces and torques on the soles of the supporting foot/feet. These reactions forces/torques are particularly important for postural control as they define the Zero Moment Point (ZMP), i.e. the centre of pressure under the feet soles (the point where the sum of all reaction torques acting on the soles of the feet is equal to zero), which is the primary measure and objective of postural equilibrium;
(b) designing a gait so that nominal (i.e. open loop) trajectories of the projection of the Center of Gravity (COG) on the ground (and consequently trajectories of the joint angles) satisfy at each instant of time precise ZMP constraints in order to guarantee equilibrium during a dynamic walk. This requires a certain degree of prediction, as it is customarily known in the literature for Preview control (see for example: B. Siciliano, O. Khatib (edt.), Springer Handbook of Robotics, 2008; or T. Katayama, T. Ohki, T. Inoue, T. Kato, Design of an Optimal Controller for a Discrete Time System Subject to Previewable Demand, International Journal of Control 41(3) (1985), 677 - 699);
(c) transferring reference trajectories (defined in terms of positions, velocities, constraint reaction forces and torques) from the Cartesian space to the joint space for closed loop motion control; this involves inverse kinematics and dynamics in a highly non-linear environment, in the presence of singularities.

The first aspect (point (a)) of dynamical modeling of the multi-body is approached adopting the so called Kane's method (the approach is described in T. R. Kane, D. E. Levinson, "Dynamics Theory and Applications", McGraw-Hill, 1985), which has not yet been widely applied in robotics. The primary contribution of the Kane's method, with respect to other modeling approaches, is the introduction of the vector of partial velocities and partial rotational velocities to represent velocities of each point, and rotational velocities of each body of the chain. In fact, these velocities can be expressed by linear combinations of the vectors of partial velocities or rotational velocities, with the common set of independent generalized velocities of the multi-body.

As will be clarified in the following, the Applicant has realized that the Kane's method offers the following advantageous features:

- it clearly expresses, for each one of the two distinct phases of the gait (single stance and double stance), the number of degrees of freedom of the multi-body chain when non-holonomic constraints are present, identifying the generalized variables ("Variables" by Kane) for movement control, the independent generalized velocities ("Motion Variables" by Kane) and the resulting minimal set of differential equations; and
- it explicitly provides the mathematical expressions of the reaction forces and torques on the constraints (feet soles), as a function of position, velocity, acceleration, and joint torques; moreover, through the vector of partial velocities, expressions for the Jacobians of all needed Cartesian velocities (i.e. variables expressed in the three-dimensional xyz Cartesian space) with respect to the independent motion variables (expressed in the space of the joints) are readily available.

For the second aspect (point (b)), COG trajectories during the different phases of the stride, satisfying ZMP constraints for postural equilibrium, are generated based on a linearised inverted pendulum, as discussed in a recent work of Choi (Youngjin Choi, Doik Kim, Yonghwan Oh, and Bum-Jae You, Posture/Walking Control for Humanoid Robot Based on Kinematic Resolution of CoM Jacobian With Embedded Motion, IEEE TRANSACTIONS ON ROBOTICS, VOL. 23, NO. 6, December 2007, 1285) and early works on preview control (e.g. the above cited: T. Katayama, T. Ohki, T. Inoue, T. Kato, Design of an Optimal Controller for a Discrete Time System Subject to Previewable Demand, International Journal of Control 41(3) (1985) 677 - 699).

For the third aspect (point (c)), according to a particular aspect of the present invention, techniques based on Jacobian functions and matrices are adopted for performing the inverse kinematics.

Dynamical modeling of the multi-body

The approach based on the Kane's method is discussed here in a practical example, where several simplifying assumptions are made, without however this implying any loss of generality, since the approach can easily be extended to a more general case.

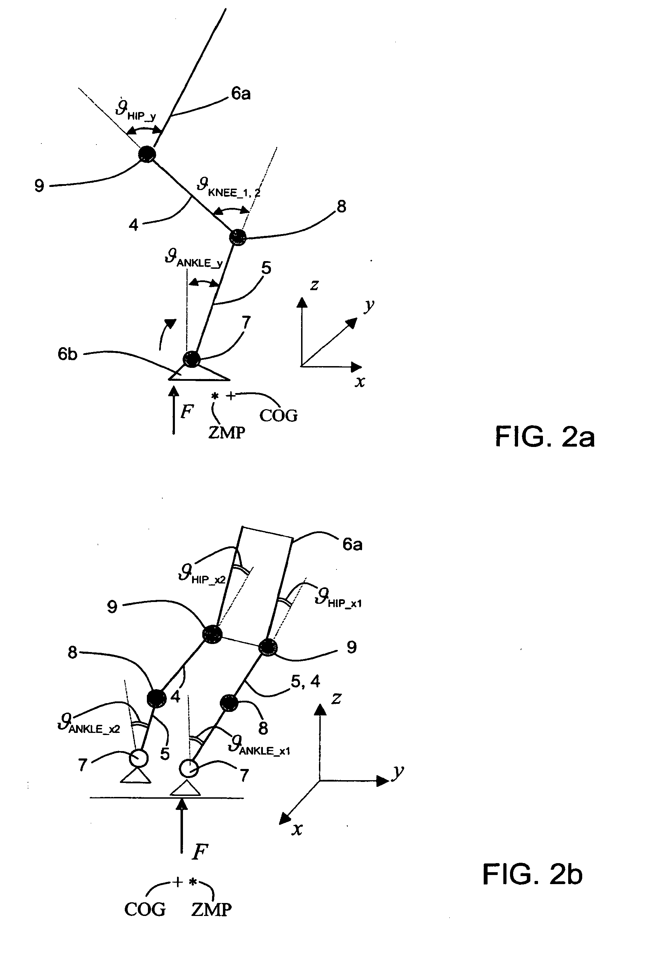

In particular, the walk is assumed rectilinear, as on a treadmill, and the gait periodical; the ground surface is assumed to be horizontal. Moreover, as shown in Figures 2a and 2b, referring to the sagittal and, respectively, frontal planes, a simplified dynamical model of seven rigid fixed-length segments and perfect pivot joints is assumed for the multi-body system represented by patient and exoskeleton device. This dynamic model is based on a multiple inverted pendulum, actuating the movement of ankle, knee and hip joints, according to the phases of double or single stance during the gait.

The mechanical degrees of freedom, constraints and independent joint angles (generalized variables) and velocities (generalized velocities) during the gait, approached by the Kane's method, are now discussed in more details, with reference to this practical example.

The number of joints is assumed equal to ten, five for each leg: two joint angles at the ankle joint 7, denoted with $\vartheta_{ankle\_x}, \vartheta_{ankle\_y}$ respectively referred to angular rotations around the x and y axes; one joint angle at the knee joint 8, denoted with $\vartheta_{knee}$, referred to a rotation around the y axis; and two joint angles at the hip joint 9, $\vartheta_{hip\_x}, \vartheta_{hip\_y}$ again respectively referred to rotations around the x and y axes (no hip rotation is here assumed along the z axis). It is to be noted that not necessarily all joints are motorized, as will be discussed later.

Ten joints are not enough, even for a rectilinear walk; however they are sufficient for describing the problem and simplify the following discussion. In fact, the simulation example presented at the end of this discussion, based on the same techniques, use a more realistic model with twelve joints.

Figures 2a and 2b also show the adopted axes conventions; positive angles follow the right-handed rotation rule, and angles on the joints are measured starting from the feet to the hips.

Under these assumptions, the multi-chain system in the Cartesian space (xyz space) has globally 15 degrees of freedom (dof): ten joint rotations (see above discussion); three translations along the x, y and z axes and two rotations around the x and y axes for the supporting foot (no rotation is assumed along the z axis).

In the single stance phase, assuming the supporting foot to be the right one, fixed (so, position and rotational velocities equal to zero) and the left swinging foot parallel to the ground (rotational velocities along the x and y axes equal to zero), seven constraints are present, resulting in: three reaction forces, along the x, y and z axes, and two torques around the x and y axes exchanged by the supporting foot with the ground; and two torques around the x and y axes on the swinging foot.

Consequently, the number of independent joint angles, to which position control will be applied, i.e. the number of mechanical degrees of freedom of the system, is equal to eight (in the following expressions, suffix 1 denotes the right supporting leg, while suffix 2 denotes the left swinging leg and suffix "s" denotes the single-stance phase):

$$\vartheta_{ind\_s} = \left[\vartheta_{ankle\_x\_1}, \vartheta_{ankle\_y\_1}, \vartheta_{knee\_1}, \vartheta_{hip\_x\_1}, \vartheta_{hip\_y\_1}, \vartheta_{hip\_x\_2}, \vartheta_{hip\_y\_2}, \vartheta_{knee\_2}\right]^T$$

The number of dependent joints is thus equal to two, referring to the ankle joints 7 of the swinging foot:

$$\vartheta_{dep\_s} = \left[\vartheta_{ankle\_x\_2}, \vartheta_{ankle\_y\_2}\right]^T .$$

The vector of reaction forces/torques on the supporting foot is defined as:

$$F_1 = \left[forceFoot_{1\_x} \quad forceFoot_{1\_y} \quad forceFoot_{1\_z} \quad torqueFoot_{1\_x} \quad torqueFoot_{1\_y}\right]^T$$

Moreover, the torque vector needed to control position of the eight independent joints (referred to as the position control input) is denoted with $\tau_{pos\_s}$; the vector of torques on the two dependent ankle joints needed to maintain the swinging foot parallel to the ground (referred to as the constraint control input) is denoted with $\tau_{con\_s}$, which is relatively unimportant in this phase for the postural equilibrium; and the vector of torques applied to the other joints, redundant to maintain position (referred to as the auxiliary control input) is denoted with $\tau_{aux-s}$, in this case absent, as none of the joints are subject to auxiliary controls.

It is to be noted that the choice of independent joints is in general not unique; the Kane's method and the supporting tool of symbolic analysis (known as AutoLev, see Kane and Levison, "Dynamics Online: Theory and Implementation with Autolev", 2000, http://www.autolev.com/index2.html) allow to verify all possible choices of independent variables and derive for each one of the possible choices, the relative equations (among which the expressions for the Jacobians).

During the double stance (where no translations and no rotations are envisaged for both feet), only five independent joint angles are present, so that control of only five torques is needed in order to guarantee the desired reference tracking.

The following joint angles are selected as independent (however, it is again underlined that the choice is not unique):

$$\vartheta_{ind\_d} = \left[\vartheta_{ankle\_x\_1}, \vartheta_{ankle\_y\_1}, \vartheta_{knee\_1}, \vartheta_{hip\_y\_1}, \vartheta_{knee\_2}\right]^T$$

as a consequence the following joint angles are dependent:

$$\vartheta_{dep\_d} = \left[\vartheta_{hip\_x\_1}, \vartheta_{hip\_y\_2}, \vartheta_{hip\_x\_2}, \vartheta_{ankle\_x\_1}, \vartheta_{ankle\_y\_2}\right]^T$$

(in the above expressions, suffix "d" denotes the double-stance phase).

Moreover $F=[F_1, F_2]^T$ is the vector of reaction force/torques on both feet; $\tau_{pos\_d}$ is the torque vector to control the five independent joints; vector $\tau_{con\_d}$ includes no elements in this stance; and $\tau_{aux\_d}$ denotes the auxiliary torques on the remaining five dependent joints. These last torques, redundant for position/velocity control, are used, instead, to control reaction forces and torques under the soles of the feet. As will be detailed in the following, this force control is advantageous in double stance for the transition of load from one foot to the other before switching to single stance, and to accommodate collision of the free swinging foot to the ground when returning to double stance.

Designing the gait

The approach to guarantee postural equilibrium by the linearized inverted pendulum theory is known in the literature, as well as the use of Jacobians, and pseudo-inverses of Jacobians to perform inverse kinematics on the velocities, or on the perturbations of the independent joint angles. However, in the approaches available in the literature, these techniques have been used partially, just for guaranteeing postural equilibrium in closed loop (i.e. in terms of behavior of COG and ZMP), integrated by other techniques to achieve the complete attitude and postural control of the multi-body system.

On the contrary, according to a particular aspect of the present embodiment, the linearized inverted pendulum theory and the use of Jacobians to perform inverse kinematics, are exploited here to synthesize the control in closed loop of the whole set of Cartesian constraint variables (i.e. COG-ZMP, body attitudes, knee angles, swinging foot behavior), needed to guarantee posture during the gait, variables thus equal in number to the number of mechanical degrees of freedom of the multi-body, expressed by the independent motion variables in each stance. It is to be noted that this approach offers a unitary control action during the gait, both for the single and double stance, and techniques for the transition from one phase to the other, which does not have to be integrated by any other control technique to achieve the complete control of the multi-body (in other words, the number of Cartesian variables is at least equal, i.e. not lower than, the number of independent joint variables associated to the robotic device, corresponding to the number of degrees of freedom of the same robotic device).

In detail, the vectors of reference trajectories (including positions and velocities) of the horizontal x and y Cartesian coordinates of the COG, guaranteeing an appropriate behavior of the ZMP for postural equilibrium during the gait, denoted with $COG_{preview\_xy}, C\dot{O}G_{preview\_xy}$, may be generated with a look-ahead strategy for quasi periodic behavior, as in known preview control (see e.g. T. Katayama, T. Ohki, T. Inoue, T. Kato, "Design of an Optimal Controller for a Discrete Time System Subject to Previewable Demand", International Journal of Control 41(3), 1985, 677-699); in this case, by virtue of the preview action, the COG anticipates the actual ZMP response.

As an alternative, the same trajectories may be synthesized directly from a few set of parameters for a pure periodic behavior, as shown e.g. in Youngjin Choi, Doik Kim, Yonghwan Oh, and Bum-Jae You, "Posture/Walking Control for Humanoid Robot Based on Kinematic Resolution of CoM Jacobian With Embedded Motion", IEEE TRANSACTIONS ON ROBOTICS, VOL. 23, NO. 6, December 2007, 1285; generation of these reference trajectories may be demanded to the reference-generation block 18.

These parameters, in a number equal to four, are the following: $T_{step}$ the time period of one step ($T_{stride}$=2.$T_{step}$ is the stride period); $td$, where $t_{ds}$=2·$td$ is the duration of the double stance; A is the distance between the two feet in the frontal plane; and $step$ is the length of advancement of the coordinate of the COG along the x axis, $COG_x$ (and of the swinging foot) in the sagittal plane during one step (in other words, the length of advancement during one step).

These four parameters can be preset to nominal values, or, in the presence of patient compliance (and the ability of the patient to partially perform voluntary movements), may be easily identified on-line and adaptively adjusted from the patient behavior; in other words, these parameters may be computed on-line from the intention of movement of the patient, so as to comply to the patient efforts. Accordingly, the trajectories of the horizontal x and y Cartesian coordinates of the COG may be computed on-line based on only these parameters.

The vectors $x_{swing\_foot\_ref}, \dot{x}_{swing\_foot\_ref}$ indicate the reference trajectories (in terms of positions and velocities in the Cartesian space) of a fixed point of the swinging foot during the single stance period.

These trajectories can be preset, or alternatively synthesized in real-time adopting simple (e.g. sine and cosine) functions based on few parameters, in particular two parameters: $step,$ the length of the step forward (same as before); and $h_z$, the maximum height reached by the swinging foot.

Also in this case, both parameters can be adjusted adaptively from the patient behavior, so as to comply thereto in real time.

The vectors $\vartheta_{attitude\_ref}, \dot{\vartheta}_{attitude\_ref}$ indicate the desired average attitude and rotational velocity of the trunk around the x and y axes. For example, the following values may be chosen: $\vartheta_{attitude-x-ref} = 0, \vartheta_{attitude\_y\_ref} = 0$ or $\delta$ (the latter value meaning a slight leaning forward of the trunk), $\dot{\vartheta}_{attitude\_ref} = 0.$

Moreover, $COG_{ref\_z}, C\dot{O}G_{ref\_z}$ are the average desired reference position and velocity of the z (vertical) coordinate of the COG (or of another chosen reference point of the body); for example, the following values may be chosen: $COG_{ref\_z} = c_z$ (i.e. being a constant); and $C\dot{O}G_{ref\_z} = 0$ .

From these constraints in the Cartesian space (including imposed trajectories for the COG needed to maintain postural equilibrium), the whole joint trajectories (in the joint space) may be generated.

To this end, Jacobian matrices (Jacobians) of the controlled Cartesian variables, with respect to the independent joint angles, are computed.

In particular, $J_{cog\_xy\_s}, J_{cog\_xy\_d}, J_{cog\_z\_s}, J_{cog\_z\_d}$ indicate the COG Jacobians with respect to the independent joints in single and double stance (since they are not identical in the two cases), for the first two horizontal coordinates (x, y), and the third vertical coordinate (z), respectively, of the Cartesian space.

Moreover, $J_{\text{swing\_foot\_s}}$ denotes the Jacobian function for the three Cartesian coordinates of the swinging foot during single stance; and $J_{attitude\_s}, J_{attitude\_d}$ denote the Jacobian functions linking attitude angle velocities of the body, around x and y axes, and the independent joint velocities in single or double stance.

Furthermore, denoting with:

$$\Theta = \begin{bmatrix} \vartheta_{ind} \\ \vartheta_{dep} \end{bmatrix}$$

the vector of all joint angles, being $\vartheta_{ind}, \vartheta_{dep}$ the independent and dependent joints (different according to the single and double stance), respectively, the following linear relationship between independent and dependent joint angles holds:

$$\dot{\vartheta}_{dep\_s} = J_{\vartheta\_dep\_s} \cdot \dot{\vartheta}_{ind\_s} , \quad \dot{\vartheta}_{dep\_d} = J_{\vartheta\_dep\_d} \cdot \dot{\vartheta}_{ind\_d} .$$

It is underlined that all the above Jacobians can be computed in real time from the joint angle measures or estimates, the assumed kinematics and weight distribution. The Jacobian expressions are explicitly given by the vector of partial velocities of the Kane's method.

Starting from these Jacobians, it is possible to derive the joint reference velocities, that satisfy the Cartesian constraints (imposed trajectories), and may act as input to joint velocity controllers (as will be discussed in the following).

Moreover, estimates are generated starting from actual sensor measures (including the center of pressure under the supporting foot/feet, the joint angles, the body attitude, the height of the swing foot, and the height of the barycentre, or a reference point of the body). In particular, using a Kalman filter and adopting the linearized inverted pendulum model (see the above mentioned patent application EP 2 238 894 A1), estimated values for the following Cartesian constraint variables are generated: $C\hat{O}G_{xy}, C\hat{\dot{O}}G_{xy}, C\hat{\ddot{O}}G_{xy}, Z\hat{M}P_{xy}$ ; using other simple estimation techniques the following estimates are also obtained: $\hat{x}_{swing\_foot}, \hat{\vartheta}_{attitude}, C\hat{O}G_z$.

In more details, Jacobian matrices $J_s$ and $J_d$ are the two square matrices (8x8 and 5x5, respectively) built from the above defined Jacobians for the single and double stance:

$$J_s = \begin{bmatrix} J_{cog\_xy\_s} \\ J_{swing\_foot\_s} \\ J_{attitude\_s} \\ J_{cog\_z\_s} \end{bmatrix}, \; J_d = \begin{bmatrix} J_{cog\_xy\_d} \\ J_{attitude\_d} \\ J_{cog\_z\_d} \end{bmatrix}$$

These matrices link velocities in the Cartesian space, where the trajectory constraints are defined, to the (independent) joint space, according to the following expression (1):

$$V_s = J_s \cdot \dot{\vartheta}_{ind\_s}, V_d = J_d \cdot \dot{\vartheta}_{ind\_d} \qquad (1)$$

where $V_s$, $V_d$ are the Cartesian reference or preview velocities, given by the following expressions, respectively in the single and double stance:

$$V_s = \begin{bmatrix} C\dot{O}G_{xy\_preview} & \dot{x}_{swing\_foot\_ref} & \dot{\vartheta}_{attitude\_ref} & C\dot{O}G_{z\_ref} \end{bmatrix}^T ,$$

$$V_d = \begin{bmatrix} C\dot{O}G_{xy\_preview} & \dot{\vartheta}_{attitude\_ref} & C\dot{O}G_{z\_ref} \end{bmatrix}^T$$

When the above Jacobian matrices are non-singular, their inverse may be used to compute the joint reference velocities from the Cartesian space constraints, achieve inverse kinematics and close a feedback control loop at the joints so as to guarantee tracking of the imposed trajectories for the Cartesian constraints.

However, the present Applicant has realized that these matrices may become singular during the gait, in particular when the legs are fully extended and knee angles reach their maximum value (adopting the present angle conventions, knee angles are always negative and assume their maximum value close to zero, see Figures 2a and 2b); accordingly, when singular, the Jacobian matrices $J_s$ and $J_d$ cannot be inverted and the control loop cannot be closed, thus preventing the possibility to successfully control the robotic device 1.

According to a particular aspect of the present embodiment, in order to overcome this technical difficulty, the set of imposed references is extended, by adding to the vector of Cartesian reference velocities (on the left hand side of the above expression (1)) the velocities of the knee joint angles of the right and left legs $\dot{\vartheta}_{knee\_1}$, $\dot{\vartheta}_{knee\_2}$, by properly setting their reference values as if they were given; it is to be noted that knee joint angles are included among the independent joint variables to be controlled on the right hand side as well.

The following identity expressions are therefore valid:

$$\lambda \begin{bmatrix} \dot{\vartheta}_{knee\_1\_ref} \\ \dot{\vartheta}_{knee\_2\_ref} \end{bmatrix} = I_s \cdot \dot{\vartheta}_{ind\_s} \ , \quad \lambda \begin{bmatrix} \dot{\vartheta}_{knee\_1\_ref} \\ \dot{\vartheta}_{knee\_2\_ref} \end{bmatrix} = I_d \cdot \dot{\vartheta}_{ind\_d}$$

where $I_s, I_d$ are matrices of all zeroes with only two elements equal to $\lambda$ in the proper column positions to select the knee angles velocities in the vectors of the independent joint variables $\dot{\vartheta}_{ind}$; and $\lambda$ is a suitable weighting factor value. It is underlined that $\dot{\vartheta}_{knee\_1}$ or $\dot{\vartheta}_{knee-2}$, or both, can be added to the constraints, according to the specific control need.

The above defined Jacobian matrices are so extended to include the additional constraints, according to the following expressions:

$$J_{es} = \begin{bmatrix} J_{cog\_xy\_s} \\ J_{swing\_foot\_s} \\ J_{attitude\_s} \\ J_{cog\_z\_s} \\ I_s \end{bmatrix}, \ J_{ed} = \begin{bmatrix} J_{cog\_xy\_d} \\ J_{attitude\_d} \\ J_{cog\_z\_d} \\ I_d \end{bmatrix}$$

and are denoted here as "Extended Jacobians".

The inverse relationship from Cartesian space to joint space can now be computed (approximately) for any joint condition, resorting to the pseudo-inverse solution, through least squares, of the extended Jacobians $J_{es}$, $J_{ed}$. In particular, by adopting weighted least squares, it is possible to reduce the role of the (only approximately known) constraints on the knee joint angles, renegotiating for example the desired $COG_z$ coordinate (since the $COG_z$ coordinate is linked to the value of the knee joint angles).

The extended Jacobian thus answers to several interesting issues:

- it copes with the occasional singularity of the standard Jacobian matrices occurring when stretching the knees during the gait;
- it copes with possible kinematical inconsistencies arising in real-time synthesis of the trajectories between knee angles, assigned $COG_z$ and swinging foot coordinates, due to approximate modeling, and simplified function generation; and
- it allows to embed the walking style of the patient in the control of the exoskeleton, by explicitly assigning the trajectories of the knee joint velocities, when interacting with the patient through compliance.

In particular, in a possible embodiment of the control scheme, the extended Jacobian matrices are always used instead of the standard ones, eventually changing in time the weights in the least squares solution (so as to adapt to the changing situations, e.g. with respect to changing patient efforts).

According to an alternative solution, the extended Jacobian matrices substitute the standard ones only when it is determined that the knee angles are, in absolute value, smaller than a given threshold (meaning that there is a risk to incur in a singularity of the Jacobian matrices), and simple recovery techniques are adopted in imposing reference knee angle trajectories, for exiting from this singularity condition or for holding this condition in a stationary fully standing up posture.

The reference trajectories of the knee joints ($\dot{\vartheta}_{knee\_1}$, $\dot{\vartheta}_{knee\_2}$) may be advantageously determined adaptively from the efforts of the patient 2, so as to comply with the intended movements, and explicitly assigned in the above expressions.

Alternatively, and this may be a preferred choice, nominal reference trajectories of the knee joints, synchronized to the gait, may arbitrarily be set (e.g. with nominal values as found on a text book), and a light weighting factor assigned thereto (e.g. comprised between 0,2 and 0,5, when the weighting factor is 1 for the other variables), so as to attribute a minor role in the control strategy (in this respect, it is clear the advantage of setting a suitable weighting factor $\lambda$, so as to properly weight the contribution of the various imposed references).

Moreover, when some of the joints are not motorized but fully controlled by the patient 2, the extended Jacobians will incorporate the measures of these joint angles, beyond the knee angles, increasing the redundancy; this may be helpful to cope with modeling approximations.

Starting from the previous expressions, a basic proportional feedback scheme for simplicity is envisaged, which results, during single stance, in the following expression:

$$\dot{\vartheta}_{ind\_ref\_s} = M_s \cdot \left( V_s + K_{p\_s} \cdot E_s \right)$$

wherein:

- $M_s$ is the inverse of the standard Jacobian matrix $J_S$, or the pseudoinverse of the extended Jacobian matrix $J_{es}$, so as to comply with the possible singularity of the same standard Jacobian matrix during the gait;
- $V_S$ is the vector of reference velocities acting as feed-forward;
- $K_{p\_s}$ is a diagonal matrix of proportional position feedback gains;
- $E_s$ is a matrix of position tracking errors, computed as the difference between the preview/reference and the value estimated from measures for the corresponding Cartesian constraints. In particular, in case of the single stance, the following expression holds:

$$E_s = \begin{bmatrix} COG_{xy\_preview} - C\hat{O}G_{xy} & x_{swing\_foot\_ref} - \hat{x}_{swing\_foot} & \vartheta_{attitude\_ref} - \hat{\vartheta}_{attitude} & COG_{z\_ref} - C\hat{O}G_z \end{bmatrix}^T$$

Similar expressions apply to the case of double stance, giving the vector $\dot{\vartheta}_{ind\_ref\_d}$, where the vectors $K_{p\_d}$, $E_d$ and $V_d$ simply miss position errors and feedforward velocities relative to the swinging foot coordinates.

In reality, the feedback loop, along with proportional control, may include dynamic components to guarantee stability. In fact Choi (see the above cited reference) has proven with Lyapunov techniques that a term proportional to the ZMP measure in the feedback, i.e. an acceleration action on the COG, guarantees stability.

The controls strategies in single left and single right stance are identical, with just the joint angles of right and left legs being interchanged. A state machine, synchronized to the gait events, switches the control strategy from single left/right to double stance, adopting each time the required expressions for the various controlled variables and references (according to a unitary control scheme).

It is to be noted that, due to the use of extended Jacobian matrices, the knee reference velocities also appear in the reference velocity vectors $V_s$, $V_d$. However, as the knee angles are only approximately known, in the feedback position tracking error vectors $E_S$, $E_d$ the knee tracking error is clearly not needed; instead, it is substituted, for the control action, by the negative of a filtered interpolation of the maxima reached by the knee angles during one stride cycle, to keep the maxima close to zero and also as a deterrent, to avoid overstretching, or inversion of sign, during the walk, due to the singularity. In particular, the control action is such as to avoid the filtered interpolation of the maxima of the knee angles to cross a zero reference angle.

<u>Further comments on the extended Jacobian matrix</u>

The relationship existing between variables $COG_z$, and $\dot{\vartheta}_{knee\_l}$, $\dot{\vartheta}_{knee\_r}$, and the over-dimensionality of the constraints in the extended Jacobian matrixes are now discussed in more details.

As it is known, the aim of the human gait is to keep vertical acceleration of the *COG* to a minimum to preserve energy, minimizing $COG_z$, oscillations. Moreover, the maximum vertical height of the barycentre during gait is slightly lower than in standing position, also depending on the speed of the walk and the length of the stride.

Exploiting the over-dimensionality of the constraints and weighted least squares, it is possible to adopt a reference $COG_z$ slightly higher than needed, contemporaneously relaxing that constraint, playing on an appropriate weight. So, the result is achieved to guarantee an erect posture during the gait at the maximum admissible height (the body is "pulled" by the feedback towards the erect posture), leaving a certain freedom of the $COG_z$ to accommodate the walk uncertainties, contemporaneously acting on the feedback gain to minimize the $COG_z$ oscillations.

It is underlined that this solution can be extended adding other redundant constraints at some of the other independent joints (in addition to the constraints on the knee velocities) and using weighted least squares to overcome uncertainties arising from the reduced number of degree of freedom of the model and simplified, sometime arbitrary, imposed trajectories; in this way, control uncertainties may be further accommodated.

Auxiliary Force control

According to a further aspect of the present embodiment, a force/torque control of the auxiliary joints is also implemented, based on measures of reaction forces/torques under the feet, as a further control action cooperating with the velocity control implemented on the independent joints.

In detail, it has already been shown that in double stance, because of the presence of non-holonomic constraints, the input control variables are redundant for position control; the joint torques, not needed for position control, are thus properly exploited to control forces and torques on the constraints.

Denoting with n (e.g. equal to 15) the total number of generalized variables, p (e.g. equal to 10) the number of controllable joints, m (e.g. equal to 10) the number of constraints, and $n$-$m$ (e.g. equal to 5) the number of independent motion variables of the system, $\tau_{pos\_d}$ are the $n$—$m$ input torques to control the independent joint angles, and $\tau_{aux\_d}$ the remaining p-(n-m) input torques, associated to the dependent joints.

Moreover,

$$F = \begin{bmatrix} F_1 \\ F_2 \end{bmatrix}$$

is a vector including the m reaction forces/torques returned from the constraints on the right (1) and left (2) foot (e.g. measured through load cells on the soles of the feet).

Torques $\tau_{pos\_d}$ result implicitly as output of the controllers of the independent joint velocity loops, when receiving references velocities $\dot{\vartheta}_{ind\_ref\_d}$, as previously discussed; values $\tau_{aux\_d}$ (for the electric motors 10 at the dependent joints) are instead controlled with the following control scheme.

Reaction forces/torques on the left and right feet are linear function of all input torques (primary and auxiliary control variables) and of the motion variable derivatives, according to the following expression (where other nonlinear terms, Nl, are also present):

$$F = \begin{bmatrix} F_1 \\ F_2 \end{bmatrix} = \begin{bmatrix} Nl_1(\vartheta,\dot{\vartheta}) \\ Nl_2(\vartheta,\dot{\vartheta}) \end{bmatrix} + \begin{bmatrix} J_1 \\ J_2 \end{bmatrix} \cdot \ddot{\vartheta} + \begin{bmatrix} M_{1\_pos} & M_{1\_aux} \\ M_{2\_pos} & M_{2\_aux} \end{bmatrix} \cdot \begin{bmatrix} \tau_{pos\_d} \\ \tau_{aux\_d} \end{bmatrix}$$

Hence, in particular:

$$F_1 \propto M_{1\_aux} \cdot \tau_{aux\_d}, F_2 \propto M_{2\_aux} \cdot \tau_{aux\_d}$$

are the proportional relationship between the vector of $p$- $(n$-$m)$ auxiliary control variables $\tau_{aux\_d}$ and the vector of $m$ reaction forces/torques $F_1,F_2$ on the right and the left feet. The matrices $M_{r\_aux}, M_{l\_aux}$ are explicitly available from the Kane's method.

As previously indicated, $t_{ds}$, denotes the time period of double stance, when the weight is shifting from one foot to the other. At the beginning of the stance, the totality of the reactions rests on the previous supporting foot, for example the right foot (i.e. $F_2$=0), and the opposite occurs at the end of the stance (i.e. $F_1$,=0). In between, the dynamics will impose the value of the sum of the two reactions $F_1 + F_2$.

For this, during the transition, $F_1$ and $F_2$ cannot be controlled independently, but, using the auxiliary torque values, the reaction force/torques on each foot are imposed to follow two references complementary percentages of the total value:

$$F_{1\_ref} = (F_1 + F_2) \cdot (1 - \alpha),$$
$$F_{2\_ref} = (F_1 + F_2) \cdot \alpha,$$
$$0 \leq \alpha \leq 1, i.e.\ \alpha = \frac{(t - t_0)}{t_{ds}}$$

where $t$ is a current time, $t_0$ the starting time, and $t_{ds}$ the period of double stance. A reference linear transition has thus been assumed, as an example, but other strategies may be adopted.

The force tracking errors may be expressed as:

$$e_1 = F_{1\_ref} - F_1,$$
$$e_2 = F_{2\_ref} - F_2.$$

The difference between the two tracking errors:

$$e_1 - e_2 = (F_1 + F_2) \cdot (1 - 2\alpha) - (F_1 - F_2),$$

is an independent variable, which is computed from $F_1, F_2$.

Tracking of the desired transition is achieved by minimising the difference $e_1 - e_2$ iteratively with a gradient technique, with the auxiliary torques given by:

$$\tau_{aux\_d}(t + \Delta) = \tau_{aux\_d}(t) + (M_{1\_aux} - M_{2\_aux})^T \cdot k \cdot (e_1(t) - e_2(t)).$$

Under mild conditions, values of the feedback k exist that guarantee stability and convergence of the recursion, with reaction forces/torques under the feet properly behaving as desired.

At the beginning of the gait, the first double stance period starts from a central position with evenly balance on both feet; tracking is then the following:

$$e_1 = \frac{(F_1 + F_2)}{2} \cdot (1 - \alpha) - F_1,$$

$$e_2 = \frac{(F_1 + F_2)}{2} \cdot (1 + \alpha) - F_2,$$

$$0 \leq \alpha \leq 1, i.e.\ \alpha = \frac{(t - t_0)}{t_{ds}}$$

i.e.

$$e_1 - e_2 = -(F_1 + F_2) \cdot \alpha - (F_1 - F_2),$$

being symmetrical at the end.

Force/torque control also allows to accommodate the collisions of the swinging foot to the ground at the end of the single stance phase of the gait.

Experimental results

A simulated experimental test and the associated results are now discussed, based on the above discussed control scheme (in this example, no compliance to the patient is assumed).

A 75 Kg human body, 1.78 m tall, has been dimensioned using standard parameters, e.g. as discussed in David A. Winter, "Biomechanics and motor control of human movement", fourth edition, John Wiley & Sons 2009, chapter 3, pages 60-64; a 45 Kg exoskeleton has been considered.

To represent a more realistic human gait with loading response, mid stance and terminal stance phases, four dof have been added to the previously discussed model, with hip rotations along the z axis in the multi-body kinematics and allowing feet rotation along the y axis; the number of controlled variables and imposed references in the Cartesian space has been properly augmented (it is thus to be noted that the number of dof may be easily changed and adapted to the specific control needs).

Elasticity of the joints and dynamics of the servo-controllers have been added, no compliance has been considered.

A rectilinear walk has been simulated starting and ending in evenly balance standing position, with a transition to/from periodic behavior in the first and last stride obtained with preview control, and in between a periodic gait. The following parameters have been adopted: $I_{step} = 0.9s; td = 0.09s ; A = 0.34m ; step=0.5m.$ A complete stride is recorded, after a periodic behavior has been reached.

An extended Jacobian has been adopted, in order to avoid singularities; in particular, nominal trajectories of knee angle velocities during a gait cycle have been adopted, as mentioned in J. Patton, "Gait Mechanics", http://www.smpp.northwestern.edu/~jim/kinesiology/partB_ GaitMechanics.ppt.pdf. No knee tracking error has been recorded, but simply an interpolated behavior of the maxima reached by the knee angles has been returned in feedback, as deterrent to avoid knee overstretching.

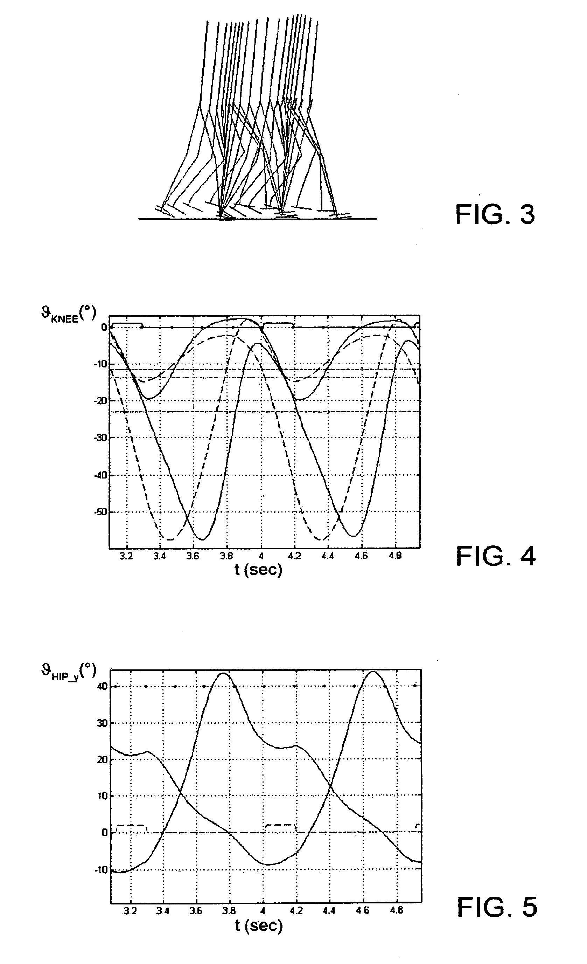

In particular, the Applicant has shown that the extended Jacobian with a light weighting coefficient λ= 0.2 on the knees (just needed to improve the conditioning of the extended Jacobian), with a very approximate tracking of the quasi-arbitrary nominal reference trajectories (see Figure 4) robustly accommodates the specific case, with complete extension of the knees not incurring into singularity problems of the inverse kinematics (the control system is designed so that the quasi-arbitrary nominal trajectories for the knee angles are not to be necessarily tracked during the gait).

The results of the experimental test are shown in Figures 3-22.

In detail, Figure 3 plots consecutive frames of a stride, represented in the sagittal plane.

Figures 4, 5, 6 represent the behavior of the joints in the sagittal plane in terms of knee, hip and ankle angles, respectively. The stride is divided in 10 phases (the periods of double stance are emphasized); the nominal standard trajectories imposed to the knee angles are shown with a dashed line in Figure 4.

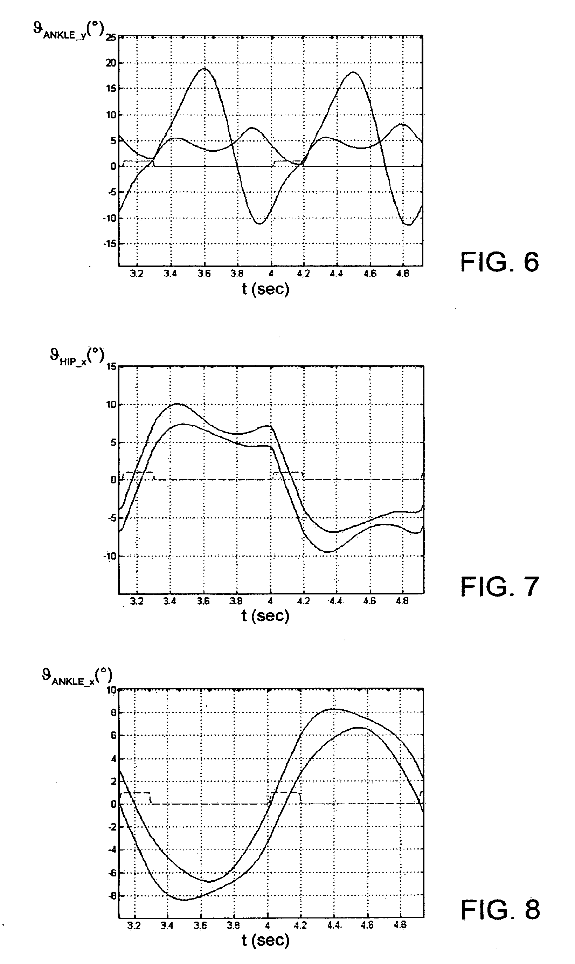

Figures 7 and 8 show the behaviour of the hip and ankle angles, respectively, in the frontal plane.

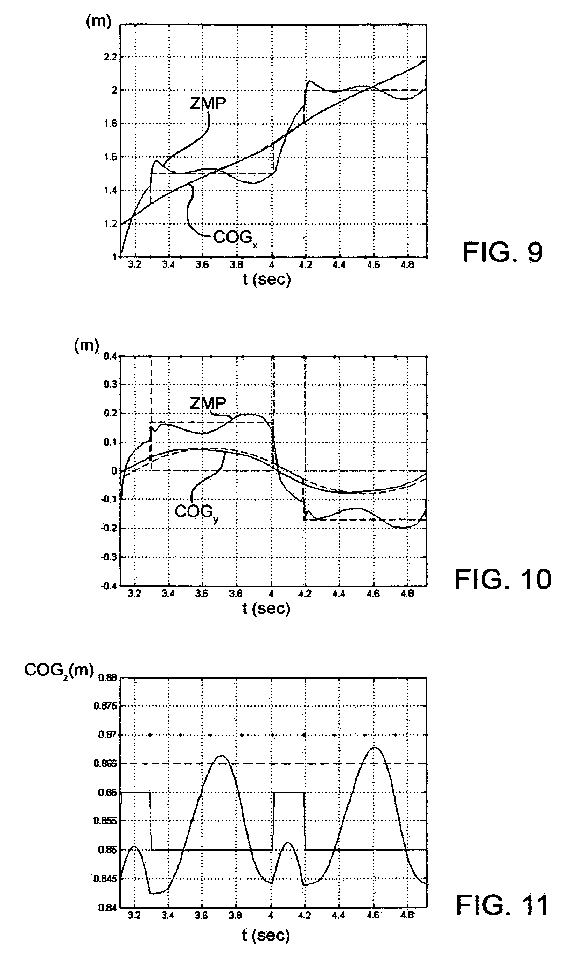

Figures 9 and 10 show COG and ZMP trajectories in the sagittal and frontal plane, respectively; references are shown with a dashed line.

Figure 11 shows the vertical coordinate of the COG, as compared to the reference position (shown with a dashed line).

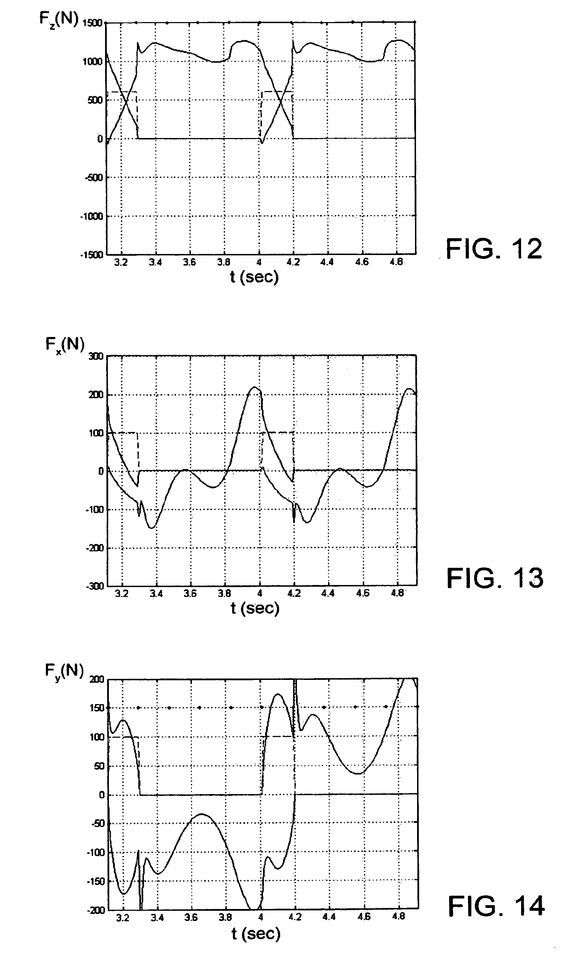

Figure 12 shows the ground vertical reaction forces; Figure 13 shows the ground horizontal reaction forces along the x axis; Figure 14 shows the reaction forces on the feet along the y axis.

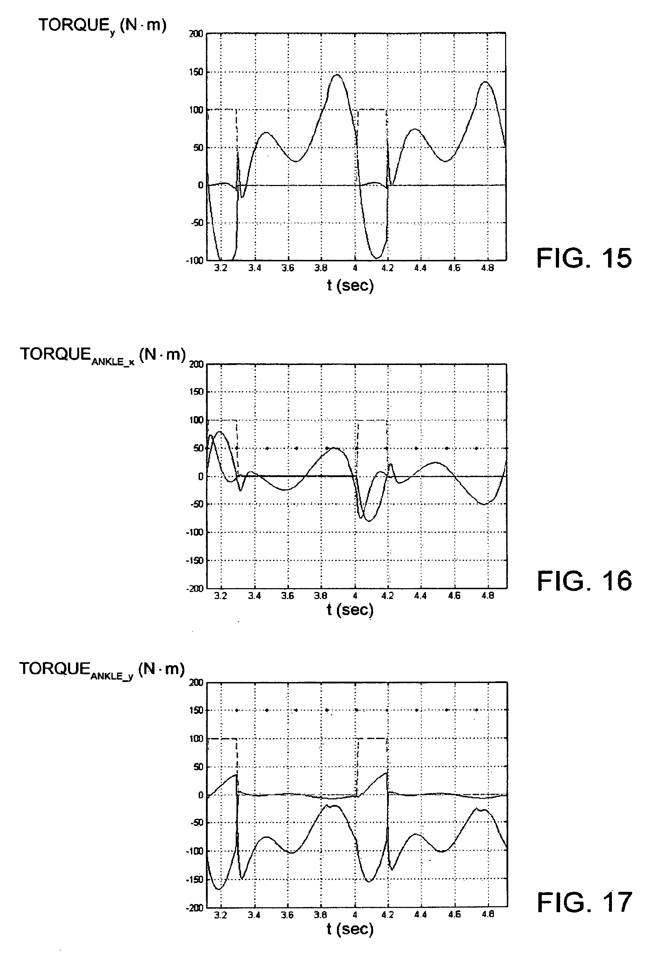

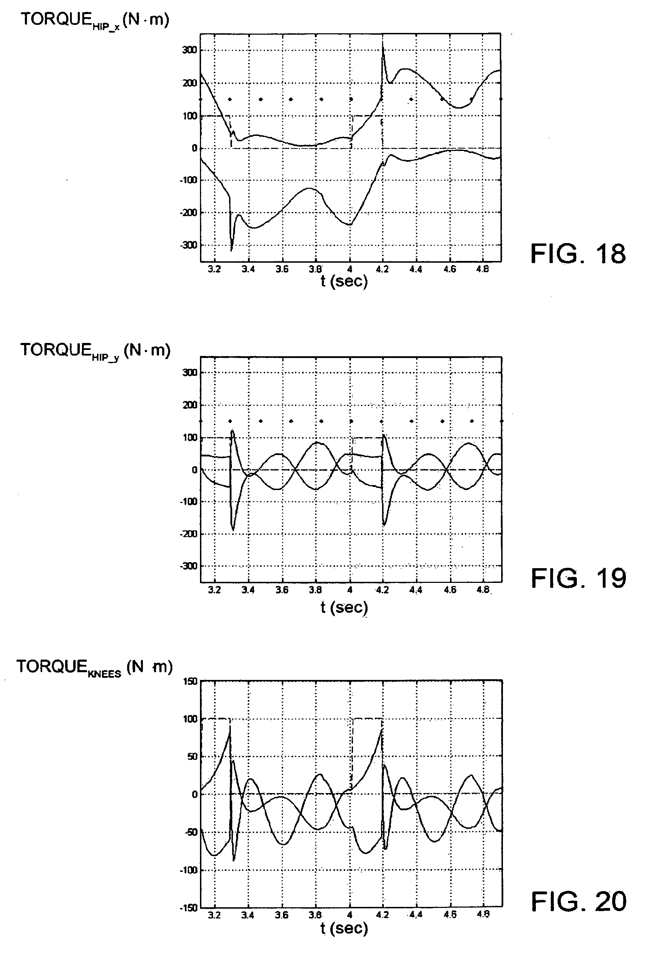

Figure 15 shows the reaction torques on the feet along the y axis; Figure 16 shows the torques on the ankle joints along the x axis; Figure 17 shows the torques on the ankle joints along the y axis; Figure 18 shows the torques on the hip joints along the x axis; Figure 19 shows the torques on the hip joints along the y axis; Figure 20 shows the torques on the knee joints.

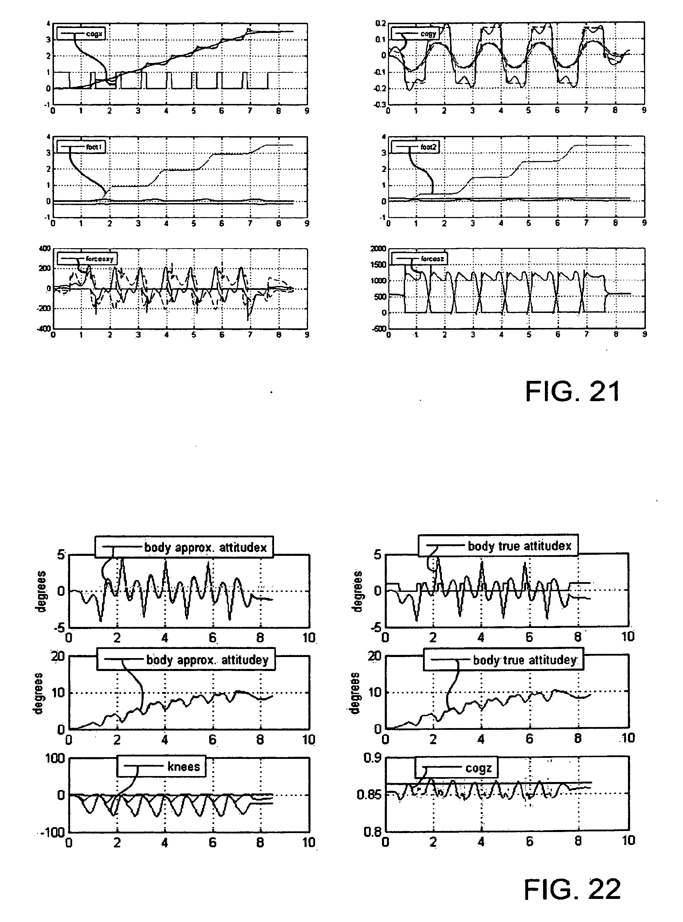

Figure 21 shows plots related to the synthesis of the whole walk; Figure 22 shows plots related to the attitude of the trunk.

Patient compliance

Another particular aspect of the present control system is now discussed, relating to patient compliance exploiting admittance control.

From previous discussion it has been underlined that the proposed control system can be used to move an autonomous robot (or a patient completely unable to walk), but it could also be embedded in the form of a hybrid control where some of the joints are not powered (i.e. completely controlled by the patient; the case when illness of the patient is on some specific joints, only), or through admittance control, because of compliance, are partially actuated by the patient.

In fact, it is indeed sufficient, as it has already been shown for the knee joints (which are particularly important since they can be used to give the pace to the whole gait), to extend the Jacobian matrices, by adding joint reference angles fully or partially controlled by the patient as further constraints in the system of equations linking Cartesian and joint spaces, in a redundant control setting.

For the joints under the velocity loop monitored by bioelectric signals, because of admittance control, the patient will feel an attraction towards the nominal trajectory imposed by the nominal gait trajectory, the level of attraction depending on the assigned admittance.

The case of patient compliance during the double stance deserves more details.

As previously discussed, admittance control is implemented only on the independent joints, which are controlled in velocity. In single or double stance, some of the joint angles are dependent, and, especially in double stance (where non-holonomic constraints are present), dependent joints are controlled in torque (as previously explained), and do not enjoy independent motion.

In order to cope with this situation, the torques measured from EMG signals on all joints (dependent and independent) have to be averaged, in order to define an equivalent admittance felt by the patient.

To cope with this situation a common identical admittance is chosen for all joints. The Laplace transform of the relationship between torques experimented by the patient and joint motion is given by the following expression:

$$Y \cdot \begin{bmatrix} T_{ind} \\ T_{dep} \end{bmatrix} = \begin{bmatrix} \dot{\vartheta}_{ind} \\ \dot{\vartheta}_{dep} \end{bmatrix} = \begin{bmatrix} I \\ J_{\vartheta\_dep} \end{bmatrix} \cdot \dot{\vartheta}_{ind}$$

wherein $Y$ is the scalar admittance, assumed common to all joints, and $T_{ind}$, $T_{dep}$ are the torques measured on the patient, for the independent and dependent joints, respectively.

The equivalent admittance obtained by pseudo-inverse shows how the torques are averaged:

$$Y \cdot \left[ I + J^T{}_{\vartheta\_dep} \cdot J_{\vartheta\_dep} \right]^{-1} \cdot \left[ T_{ind} + J^T{}_{\vartheta\_dep} \cdot T_{dep} \right] = \dot{\vartheta}_{ind} \ .$$

The vector $[I+J^T{}_{\vartheta\_dep} \cdot J_{\vartheta\_dep}]^{-1} \cdot [T_{ind}+J^T{}_{\vartheta\_dep} \cdot T_{dep}]$ is the input applied to the independent joints.

Control block diagram

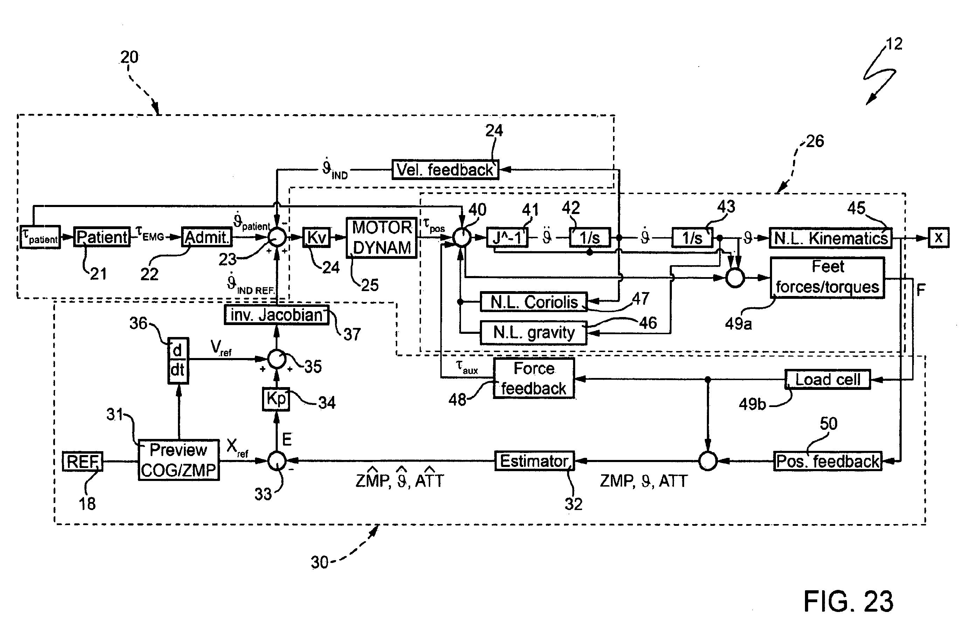

A block diagram of the control algorithm implemented by the control unit 12 of the robotic device 1 is now discussed, with reference to Figure 23, relating to an embodiment of an exoskeleton device where compliance is offered towards the patient.

In general terms, the control unit 12 is configured as a first control loop (i.e. an inner closed loop), designed linearising the model and approached as a two degree of freedom robust control, for feedback control of the velocities of the independent joints, while at the same time guaranteeing patient compliance through monitoring of the EMG signals from the patient 2. This control loop is similar to the one proposed in the above referenced previous patent application EP 2 238 894 A1; however, it is solved for admittance control in a velocity loop, instead of a position loop. Accordingly, while in the previous patent application the position was already maintained by the inner loop alone, and outer loop simply added equilibrium by moving reference positions, in the present embodiment, a velocity control of the joints is performed in the inner loop, and equilibrium and tracking of the position during the gait are fully delegated to the outer loop. Indeed, the control unit 12 is configured to implement a second control loop (i.e. an outer closed loop), cooperating with, and superimposed to, the first control loop, for tracking desired reference trajectories during the walk and at the same time controlling postural equilibrium.

In more details, the first control loop, denoted with 20, receives at input a vector of EMG signals $\tau_{EMG}$ as a measure of the patient torques $\tau_{patient}$ (in particular including the torques exerted by the patient at each of the ankle, knee and hip joints 7, 8, 9, or only at some of these joints, depending on the voluntary movements performed by the same patient); patient torques $\tau_{patient}$, through the patient physiology block 21, generate the EMG signals $\tau_{EMG}$.

The EMG signals $\tau_{EMG}$, recorded by the sensors, act as an input within the first control loop 20, and, after being processed in an admittance block 22, enter a sum block 23. As explained in detail in the above referenced patent application EP 2 238 894 A1, the admittance block 22 (according to the typical two degrees of freedom control architecture) controls the compliance offered to the patient 2 by the system and returns the desired patient joint velocities, denoted with $\theta_{patient}$.

The sum block 23 also receives: as additive input, the vector of reference angular velocities $\dot{\theta}_{ind\_ref}$ associated

to the independent joints, indicative of the desired trajectories imposed to the controlled independent ankle, knee and hip joints 7, 8, 9 during the gait, and which are generated by the outer control loop; and as subtractive input a vector of measured angular velocities $\theta_{ind}$ associated to the same independent controlled joints, from the feedback block 24.

The output of the sum block 23 is multiplied by velocity gains $K_v$ (in block 24) and processed in a motor-dynamics block 25, modeling the dynamic behaviour of the electric motors 10, for generation of the control input torques $\tau_{pos}$ for control of the independent joint angles.

Control input torques $\tau_{pos}$ enter the joint patient and exoskeleton non-linear dynamic system, denoted with 26, which will be discussed in detail in the following. The output of the non-linear dynamic system 26 is a vector of Cartesian measures x and feet reaction forces/torques F, and measures of the angular velocities $\theta_{ind}$. The angular velocities $\theta_{ind}$ are sent back, as a feedback, in the inner loop towards the sum block 23; the Cartesian measures x and feet reaction forces/torques F will close the outer loop.

The outer control loop, which is denoted with 30, not only guarantees postural equilibrium during the walk, and generates the whole reference independent joint angular velocities $\dot{\theta}_{ind\_ref}$ required to drive the joints so that they track desired gait trajectories, but also performs reaction force control.

In detail, the outer control loop 30 receives from a preview block 31 the Cartesian reference trajectories $x_{ref}$ needed for controlling the gait, including both position and velocity.

The outer control loop 30 further includes estimator block 32, which estimates relevant Cartesian variables, measured from load cell 49b and position feedback 50 (for measures of the Cartesian variables needed for position feedback).

A difference block 33 gives the feedback error between the reference/preview values and the estimate Cartesian variables that have to be tracked.

The output of the difference block 33, representing the position tracking errors E, enters a multiplier block 34, where it is multiplied by the proportional position feedback gains $K_p$, and the multiplication result is summed in block 35 to the feed-forward reference velocities $V_{ref}$ of the constraint Cartesian variables obtained through a time derivative (block 36) from the output of the preview block 31.

The output of sum block 35 is then multiplied, in processing block 37, by the pseudo-inverse of the (extended) Jacobian matrices $J_{es}$, $J_{ed}$, thus providing the reference independent joint angular velocities $\dot{\theta}_{ind\_ref}$ for the first control loop 20, such as to guarantee the postural equilibrium and walk control.

The outer control loop 30, also, controls reaction forces under the feet through torques $\tau_{aux}$: the measures of the reaction forces/torques by the block 49b, are processed by the force feedback block 48 to provide torque control to the dependent joints.

The joint patient and exoskeleton non-linear dynamic system 26 is now discussed in more details.

Dynamic system 26 is the block diagram of the following general system of differential equations in vector form:

$$J\ddot{\vartheta} + \beta(\vartheta, \dot{\vartheta}) + k(\vartheta) = B \cdot \tau \ .$$

It includes a multiplexing sum block 40, combining accordingly different components of the vector of all torques affecting the system dynamics: torques $\tau_{pos}$ resulting from the motor-dynamics block 25 to control position of the "independent" joints, and torques $\tau_{aux}$ from the force/feedback block 48, to control reaction forces/torques on the feet, measured by load cell 49b, acting on the "dependent" joints; as intrinsic feedback friction, Coriolis torques from block 47, and gravitational effects from block 46.

The sum of all torques from block 40, processed by the inverse of the inertial matrix (block 41) gives the independent joint angles accelerations, that after double integration (blocks 41 and 42) in cascade produce velocities $\theta_{ind}$ and position $\theta_{ind}$ of the independent joints.

Constraints on ground result, from block 49a, in the reaction forces/torques under the feet measured from the load cell 49b. Moreover from positions $\theta_{ind}$, the kinematics block 45 produces the Cartesian output x measured for position feedback.

From the foregoing description, the advantages that the proposed control system for controlling a robotic device allows to achieve may be immediately appreciated.

In any case, it is again underlined that a dynamically stable control system is provided, which is able to track desired trajectories during the whole gait, and to maintain postural equilibrium; the system is also able to interact with the operator/patient, offering a controlled compliance.

In particular, the control system envisages a unitary control approach during the whole gait, which is flexible and robust, and is able to overcome the technical criticalities existing in inverting the kinematics.

Advantageously, the Cartesian reference (preview) trajectories needed for the control technique can be generated online based on few parameters and simple functions, also taking into account the patient efforts (and compliance thereto).

The control solution has proven to be particularly advantageous with an exoskeleton device for rehabilitation purposes; however, the same control system, properly configured, can be used for controlling an autonomous robotic device, where no compliance is offered to the patient (or no operator is envisaged at all).

Finally, it is clear that numerous modifications can be made to the present invention, all falling within the scope of the invention, as defined in the appended claims.

In particular, it is clear that the control system may also be used (with suitable modifications) for position control and compliance in controlling the movement also of the upper limbs or other parts of the body, without requiring substantial modifications.

As it has been previously underlined, the compliance control in the first control loop may even not be present, in all the situations in which compliance is not offered to the patient, or no operator is envisaged, cooperating with the robotic device.

In this regard, the control system may also provide the possibility for inhibiting the compliance control, when it is determined that equilibrium boundaries are reached, e.g. by stiffening an elastic reaction felt by the patient 2 starting from the controlled reference position.

Moreover, the intention of movement of the patient may also be determined from other output measures; for example, the intention of movement may be determined directly or indirectly based on measures of joint angles and forces exchanged between the patient and the exoskeleton frame structure.

**Claims**

1. Control system (12), for a walking robotic device (1) having a frame structure (3) and actuator means (10) coupled to the frame structure (3) and operable to cause angular movements of a number of joints (7, 8, 9) thereof in order to generate corresponding movements of the robotic device (1) in the Cartesian space (xyz) for performing a gait; the control system (12) including:

   - an inner control loop (20), operating in the space of the joints (7, 8, 9), configured to feedback control a number of independent joint variables ($\dot{\theta}_{ind}$) associated to joints of the frame structure (3), said number being equal to a number of degrees of freedom of the robotic device (1), based on tracking of reference joint values ($\dot{\theta}_{ind\_ref}$) for the independent joint variables ($\dot{\theta}_{ind}$) ;
   - an outer control loop (30), operating in the Cartesian space, and configured to generate the reference joint values ($\dot{\theta}_{ind\_ref}$) for the inner control loop (20) starting from imposed trajectories of Cartesian-space variables designed for postural equilibrium, through inverse kinematics obtained with Jacobians of the Cartesian-space variables with respect to the independent joint variables,
   **characterized in that** the number of the Cartesian-space variables is at least equal to the number of the independent joint variables, so as to control posture and maintain equilibrium with a unitary control approach during the gait;
   and **in that** the outer control loop (30) is configured to introduce an extended Jacobian matrix, adding, to the imposed trajectories of the Cartesian-space variables, imposed trajectories associated to at least one of the independent joint variables, and to perform inversion of the extended Jacobian matrix through a weighted least square solution, in order to prevent singularity of the inverse kinematics.

2. The control system according to claim 1, wherein the gait includes a repetition of single and double stance phases, whereby the robotic device (1) repeatedly switches from single to double stance; wherein the control approach is unitary for the single and double stance phases, taking into account respective different sets of controlled independent joint variables ($\dot{\theta}_{ind}$) and Cartesian-space variables, corresponding to different numbers of degrees of freedom for the single and the double stance phases.

3. The control system according to claim 1 or 2, wherein the independent joint variables ($\dot{\theta}_{ind}$) are angular velocities of corresponding independent joint angles, and the inner control loop (20) is a velocity control loop; and wherein the outer control loop (30) includes: an estimator block (32) configured to generate estimated values for the Cartesian-space variables from measures provided by the inner control loop (20); and a feedback block (33, 34) configured to minimize an error ($E_s$, $E_d$) between the imposed trajectories and the estimated values, thereby generating the reference joint values ($\dot{\theta}_{ind\_ref}$).

4. The control system according to any of the preceding claims, wherein the Cartesian-space variables include at least the following variables, guaranteeing posture during the gait: reference coordinates of a point fixed to a swinging foot, during a single stance phase of the gait; attitude angular rotations of the trunk; and Cartesian coordinates of the COG (Center of Gravity), obtained through a preview control in order to guarantee that the ZMP (Zero Moment Point), i.e. the point at which the resultant of the torques associated to reaction forces on the foot is zero, is maintained in a region of postural stability.

5. The control system according to any of the preceding claims, wherein the imposed trajectories associated to the Cartesian-space variables are pre-set, having nominal values.

6. The control system according to any of claims 1-5, wherein the imposed trajectories associated to the Cartesian-space variables are computed in real-time based on a number of parameters of the gait; said parameters including: the time period ($T_{step}$) of one step; the duration of a double-stance phase of the gait ($t_{ds}$) ; the distance (A) between the two feet in the frontal plane; the length of advancement (*step*) of the COG (Center of Gravity) in the sagittal plane, during one step.

7. The control system according to any of the preceding claims, wherein the at least one of the independent joint variables includes velocity of one or both knee oint angles ($\dot{\vartheta}_{knee\_l}$, $\dot{\vartheta}_{knee\_r}$), and the related imposed trajectories are quasi-arbitrary nominal trajectories; the control system (12) being designed so that said quasi-arbitrary nominal trajectories are not to be necessarily tracked during the gait.

8. The control system according to any of the preceding claims, wherein the imposed trajectories of the at least one of the independent joint variables are pre-set, according to nominal values.

9. The control system according to any of claims 1-7, wherein the frame structure (3) is designed to be coupled to the body of a subject (2); and the imposed trajectories of the at least one of the independent joint variables are computed in real-time based on detected bioelectric signals ($\tau_{EMG}$), indicative of voluntary movements of the subject (2), so as to comply thereto.

10. The control system according to any of the preceding claims, wherein the weighted least square solution envisages associating to the imposed trajectory of the at least one of the independent joint variables a weighting factor, which is lower than weighting factors associated to the imposed trajectories of the Cartesian-space variables, thereby softening a constraint on the imposed trajectory of the at least one of the independent joint variables.

11. The control system according to any of the preceding claims, wherein the at least one of the independent joint variables includes velocity of a knee joint angle ($\dot{\vartheta}_{knee\_l}$, $\dot{\vartheta}_{knee\_r}$); and wherein the outer control loop (30) is configured to introduce the extended Jacobian matrix, when it is determined that the knee joint angle has a given relationship with a threshold value, indicative of a possible singularity for the inverse kinematics.

12. The control system according to any of the preceding claims, wherein the frame structure (3) is configured to be coupled to the body of a subject (2), and has at least a further joint, which is not powered by the actuator means (10) and is at least partially actuated by the subject; wherein the outer control loop (30) is configured to further extend the Jacobian matrix, by also adding a trajectory followed by the further joint, as a further constraint in the system of equations of the inverse kinematics, linking the Cartesian space to the joint space.

13. The control system according to any of the preceding claims, further comprising a torque control loop (48), configured to cooperate with the inner (20) and outer (30) control loops thereby merging motion and force control, in order to input auxiliary torques on dependent joints of the frame structure (3), to control ground reaction forces and weight transitions between a supporting and a swinging foot during double stance, and to accommodate collision switching from single to double stance.

14. The control system according to any of the preceding claims, wherein the independent joint variables ($\dot{\theta}_{ind}$) are velocities of corresponding independent joint angles, and wherein the frame structure (3) is configured to be coupled to the body of a subject (2), the robotic device (1) including sensor means (14), coupled to the body and configured to detect bioelectric signals ($\tau_{EMG}$) indicative of subject torques ($\tau_{patient}$) at the joints of the frame structure (3) ; wherein the inner control loop (20) includes an admittance stage (22), configured to control a compliance presented by the robotic device (1) to the subject (2) based on the detected bioelectric signals according to a perceived admittance; wherein the frame structure (3) also includes dependent joint angles, which do not have an independent motion, and wherein subject torques ($\tau_{patient}$) measured from the bioelectric signals ($\tau_{EMG}$) at all joints of the frame structure are averaged, in order to determine an equivalent admittance perceived by the subject (2).

**15.** An exoskeleton haptic device (1) comprising a frame structure (3); and actuator means (10), coupled to the frame structure (3) and operable to cause movements of a number of joints (7, 8, 9) thereof, **characterized by** comprising a control system (12) according to any one of the previous claims.

**16.** A computer program product comprising computer instructions for implementing, when executed in a processing unit, the control system (12) according to any one of claims 1-14.

**Patentansprüche**

**1.** Steuersystem (12) für eine Laufrobotervorrichtung (1) mit einer Rahmenstruktur (3) und Betätigungsmitteln (10), welche mit der Rahmenstruktur (3) gekoppelt sind und betreibbar sind, um Winkelbewegungen einer Anzahl von Gelenken (7, 8, 9) derselben zu bewirken, um entsprechende Bewegungen der Robotervorrichtung (1) im kartesischen Raum (xyz) zur Durchführung eines Ganges zu erzeugen; wobei das Steuersystem (12) aufweist:

- einen inneren Steuerkreis (20), welcher in dem Raum der Gelenke (7, 8, 9), welche konfiguriert sind, um eine Anzahl an unabhängigen Gelenkvariablen ($\dot{\theta}_{ind}$) der Gelenke der Rahmenstruktur (3) rückzukoppeln, operiert, wobei deren Anzahl gleich der Anzahl der Freiheitsgrade der Robotervorrichtung (1) ist, basierend auf der Erfassung der gemeinsamen Referenzwerte ($\dot{\theta}_{ind\_ref}$) der unabhängigen Gelenkvariablen ($\dot{\theta}_{ind}$) ;
- einen äußeren Steuerkreis (30), welcher in dem kartesischen Raum operiert und konfiguriert ist, um die Referenzwerte der Gelenke ($\dot{\theta}_{ind\_ref}$) für den inneren Steuerkreis (20) zu erzeugen, beginnend bei Zwangstrajektorien der kartesischen Raumvariablen, welche für das Gleichgewicht der Haltung entwickelt wurden, über inverse Kinematiken, welche über die Jacobi-Ableitung der kartesischen Raumvariablen bezüglich der unabhängigen Gelenkvariablen erhalten wurden
**dadurch gekennzeichnet, dass** die Anzahl der kartesischen Raumvariablen zumindest gleich der Anzahl der unabhängigen Gelenkvariablen ist, um die Körperhaltung zu steuern und um das Gleichgewicht mit einem einheitlichen Steueransatz während des Ganges aufrechtzuerhalten;
und dass der äußere Steuerkreis (30) konfiguriert ist, um eine erweiterte Jacobi-Matrix einzuführen, und dadurch den Zwangstrajektorien der kartesischen Raumvariablen Zwangstrajektorien der zumindest einen unabhängigen Gelenkvariablen zu addieren und das Invertieren der erweiterten Jacobi-Matrix über eine gewichtete kleinste-Quadrate-Lösung durchzuführen, um Singularitäten der inversen Kinematik vorzubeugen.

**2.** Steuersystem nach Anspruch 1, wobei der Gang eine Wiederholung der Einzel- und Doppelstandphasen umfasst, wobei die Robotervorrichtung (1) wiederholt von Einzel- zu Doppelstand schaltet; wobei der Steueransatz für die Einzel- und Doppelstandphasen einheitlich ist, unter Berücksichtigung der jeweils unterschiedlichen Mengen gesteuerter unabhängiger Gelenkvariablen ($\dot{\theta}_{ind}$) und kartesischen Raumvariablen entsprechend der unterschiedlichen Anzahl von Freiheitsgraden für die Einzel- und Doppelstandphasen.

**3.** Steuersystem nach Anspruch 1 oder 2, wobei die unabhängigen gemeinsamen Variablen ($\dot{\theta}_{ind}$) Winkelgeschwindigkeiten der entsprechenden unabhängigen Gelenkwinkel sind und der innere Steuerkreis (20) eine Steuereinheit zur Steuerung der Geschwindigkeit ist und wobei der äußere Steuerkreis (30) aufweist: einen Schätzblock (32), welcher konfiguriert ist, um Schätzwerte für die kartesischen Raumvariablen von Messungen zu erzeugen, welche durch den inneren Steuerkreis (20) bereitgestellt werden; und einen Rückkopplungsblock (33, 34), welcher konfiguriert ist, um einen Fehler (ES, ED) zwischen den Zwangstrajektorien und den Schätzwerten zu minimieren und dadurch die Referenzwerte der Gelenke ($\dot{\theta}_{ind\_ref}$) zu erzeugen.

**4.** Steuersystem nach einem der vorhergehenden Ansprüche, wobei die kartesischen Raumvariablen zumindest die folgenden Variablen, welche die Haltung während des Ganges sicherstellen, aufweisen: Bezugskoordinaten eines auf einem schwingenden Fuß fixierten Punktes während einer Einzelstandphase des Ganges; Haltungs-Winkeldrehungen des Rumpfes; und kartesische Koordinaten des COG (Schwerpunkt), welche über eine vorausschauende Steuerung erhalten wurden, um sicherzustellen, dass der ZMP (Nullmomentpunkt), das heißt der Punkt, an dem die Resultierende der Drehmomente der Reaktionskräfte auf den Fuß, Null ist, in einem Bereich der Haltungsstabilität aufrecht erhalten wird.

**5.** Steuersystem nach einem der vorhergehenden Ansprüche, wobei die Zwangstrajektorien der kartesischen Raumvariablen mit nominalen Werten voreingestellt sind.

**6.** Steuersystem nach einem der Ansprüche 1 bis 5, wobei die Zwangstrajektorien der kartesischen Raumvariablen in Echtzeit, basierend auf einer Anzahl an Parametern des Ganges, berechnet werden; wobei die Parameter aufweisen: die Zeitspanne ($T_{step}$) eines Schrittes; die Dauer einer Doppelstandphase des Ganges ($t_{ds}$); der Abstand (A) zwischen den beiden Füßen in der Frontalebene; die Länge eines Vorwärtsschrittes (step) des COG (Schwerpunkt) in der Sagittalebene während eines Schrittes.

7.  Steuersystem nach einem der vorhergehenden Ansprüche, wobei die mindestens eine unabhängige Gelenkvariable die Geschwindigkeit einer oder beider Kniegelenkwinkel ($\dot{\vartheta}_{knee\_l}$, $\dot{\vartheta}_{knee\_r}$) umfasst und die entsprechenden Zwangstrajektorien quasi-beliebige nominale Trajektorien sind; wobei das Steuersystem (12) derart entwickelt ist, dass die quasi-beliebigen nominalen Trajektorien nicht notwendigerweise während des Ganges verfolgt werden.

8.  Steuersystem nach einem der vorhergehenden Ansprüche, wobei die Zwangstrajektorien der mindestens einen unabhängigen Gelenkvariablen gemäß Nominalwerten voreingestellt sind.

9.  Steuersystem nach einem der Ansprüche 1 bis 7, wobei die Rahmenstruktur (3) ausgebildet ist, um mit dem Körper eines Objekts (2) gekoppelt zu sein; und die Zwangstrajektorien der mindestens einen unabhängigen Gelenkvariablen in Echtzeit berechnet werden, basierend auf detektierten bioelektrischen Signalen ($\tau_{EMG}$), welche indikativ für willkürliche Bewegungen des Objekts (2) sind, um diesen zu entsprechen.

10. Steuersystem nach einem der vorhergehenden Ansprüche, wobei die gewichtete kleinste-Quadrate-Lösung vorsieht, die Zwangstrajektorie der mindestens einen unabhängigen Gelenkvariablen einen Gewichtsfaktor zuzuordnen, welcher kleiner ist als Gewichtsfaktoren, welche den Zwangstrajektorien der kartesischen Raumvariablen zugeordnet sind, wodurch eine Zwangsbedingung der Zwangstrajektorie des mindestens einen der unabhängigen Gelenkvariablen aufgeweicht wird.

11. Steuersystem nach einem der vorhergehenden Ansprüche, wobei die mindestens eine der unabhängigen Gelenkvariablen die Geschwindigkeit eines Kniegelenkwinkels ($\dot{\vartheta}_{knee\_l}$, $\dot{\vartheta}_{knee\_r}$) aufweist; und wobei der äußere Steuerkreis (30) konfiguriert ist, um die erweiterte Jacobi-Matrix einzuführen, wenn bestimmt wird, dass der Kniegelenkwinkel einen bestimmten Bezug zu einem Schwellwert aufweist, welcher eine mögliche Singularität der inversen Kinematik anzeigt.

12. Steuersystem nach einem der vorhergehenden Ansprüche, wobei die Rahmenstruktur (3) konfiguriert ist, um mit dem Körper des Objektes (2) gekoppelt zu sein und zumindest ein weiteres Gelenk aufweist, welches nicht von den Betätigungsmitteln (10) versorgt wird und zumindest teilweise von dem Objekt betätigt wird und zumindest teilweise von dem Objekt betätigt wird; wobei der äußere Steuerkreis (30) konfiguriert ist, um außerdem die Jacobi-Matrix zu erweitern, indem auch eine Trajektorie addiert wird, welche von dem weiteren Gelenk verfolgt wird, als eine weitere Zwangsbedingung in dem Gleichungssystem der inversen Kinematik, welche den kartesischen Raum zu dem Gelenkraum verknüpft.

13. Steuersystem nach einem der vorstehenden Ansprüche, außerdem aufweisend einen Drehmomentsteuerkreis (48), welcher konfiguriert ist, um mit den inneren (20) und äußeren (30) Steuerkreisen zu kooperieren, wodurch Bewegungs- und Kraftsteuerung zusammengeführt werden, um die Hilfsdrehmomente auf abhängige Gelenke der Rahmenstruktur (3) einzubeziehen, um Bodenreaktionskräfte und Gewichtsübergänge zwischen einer Unterstützung und einem schwingenden Fuß während des Doppelstandes zu kontrollieren und um eine Kollision der Umstellung von dem Einzel- zu dem Doppelstand anzupassen.

14. Steuersystem nach einem der vorhergehenden Ansprüche, wobei die unabhängigen Gelenkvariablen ($\dot{\theta}_{ind}$) Geschwindigkeiten der entsprechenden unabhängigen Gelenkwinkel sind und wobei die Rahmenstruktur (3) konfiguriert ist, um mit dem Körper des Objekts (2) gekoppelt zu sein, die Robotervorrichtung (1) Sensormittel (14) aufweist, welche mit dem Körper gekoppelt sind und konfiguriert sind, um bioelektrische Signale ($\tau_{EMG}$), welche Drehmomente des Objektes ($\tau_{patient}$) an den Gelenken der Rahmenstruktur (3) anzeigen, zu detektieren; wobei der innere Steuerkreis (20) eine Einlassstufe (22) aufweist, welche konfiguriert ist, um eine Übereinstimmung, welche die Robotervorrichtung (1) mit dem Objekt (2), basierend auf den detektierten bioelektrischen Signalen gemäß einer wahrgenommenen Admittanz, zu steuern; wobei die Rahmenstruktur (3) auch die abhängigen Gelenkwinkel, welche nicht unabhängig beweglich sind, aufweist und wobei Drehmomente ($\tau_{patient}$) des Objektes mittels der bioelektrischen Signale ($\tau_{EMG}$) an allen Gelenken der Rahmenstruktur gemessen und gemittelt werden, um eine äquivalente Admittanz, welche von dem Objekt (2) wahrgenommen wird, zu bestimmen.

15. Haptische Vorrichtung eines Exo-Skelettes (1) mit einer Rahmenstruktur (3); und Betätigungsmitteln (10), welche mit der Rahmenstruktur (3) gekoppelt sind und betrieben werden können, um Bewegungen einer Anzahl von Gelenken (7, 8, 9) zu erzeugen, **dadurch gekennzeichnet, dass** diese ein Steuersystem (12) gemäß einem der vorhergehenden Ansprüche aufweist.

16. Computerprogrammprodukt, welches Computeranweisungen zur Implementierung aufweist, wenn diese in einer Verarbeitungseinheit ausgeführt werden, nach einem der Ansprüche 1 bis 14.

**Revendications**

1. Système de commande (12), pour un dispositif robotique susceptible d'effectuer une marche (1) comportant une structure de cadre (3) et des moyens actionneurs (10) accouplés à la structure de cadre (3) et pouvant être utilisés pour provoquer des mouvements angulaires d'un certain nombre d'articulations (7, 8, 9) de celle-ci afin de générer des mouvements correspondants du dispositif robotique (1) dans l'espace cartésien (xyz) pour effectuer une marche, ledit système de commande (12) comprenant :

   - une boucle de commande interne (20), fonctionnant dans l'espace des articulations (7, 8, 9), configurée pour commander par rétroaction un nombre de variables d'articulations indépendantes ($\dot{\theta}_{ind}$) associées aux articulations de la structure de cadre (3), ledit nombre étant égal à un nombre de degrés de liberté du dispositif robotique (1), sur la base du suivi de valeurs d'articulations de référence ($\dot{\theta}_{ind\_ref}$) pour les variables d'articulations indépendantes ($\dot{\theta}_{ind}$);
   - une boucle de commande externe (30), fonctionnant dans l'espace cartésien, et configurée pour générer les valeurs d'articulations de référence ($\dot{\theta}_{ind\_ref}$) pour la boucle de commande interne (20) en commençant par des trajectoires imposées de variables d'espace cartésien conçues pour un équilibre de posture, par l'intermédiaire d'une cinématique inverse obtenue avec les jacobiens des variables d'espace cartésien en relation avec les variables d'articulations indépendantes,
   **caractérisé en ce que** le nombre de variables de l'espace cartésien est au moins égal au nombre de variables d'articulations indépendantes, de manière à commander une posture et à maintenir un équilibre avec une approche de commande unitaire pendant la marche, et **en ce que** la boucle de commande externe (30) est configurée pour introduire une matrice jacobienne étendue, en ajoutant, aux trajectoires imposées des variables d'espace cartésien, des trajectoires imposées associées à au moins l'une des variables d'articulations indépendantes, et pour effectuer une inversion de la matrice jacobienne étendue par une solution des moindres carrés pondérés, afin d'éviter une singularité de la cinématique inverse.

2. Système de commande selon la revendication 1, où la marche comprend une répétition de phases d'appui unique et double, moyennant quoi le dispositif robotique (1) commute de manière répétée d'un appui unique à un appui double **caractérisé en ce que** l'approche de commande est unitaire pour les phases d'appui unique et double, prenant en compte différents ensembles respectifs de variables d'articulations indépendantes ($\dot{\theta}_{ind}$) et de variables d'espace cartésien commandées, correspondant à différents nombres de degrés de liberté pour les phases d'appui unique et double.

3. Système de commande selon l'une des revendications 1 ou 2, **caractérisé en ce que** les variables d'articulations indépendantes ($\dot{\theta}_{ind}$) sont les vitesses angulaires des angles d'articulations indépendantes correspondants, la boucle de commande interne (20) étant une boucle de commande de vitesse, et **en ce que** la boucle de commande externe (30) comprend : un bloc d'estimateur (32) configuré pour générer des valeurs estimées pour les variables d'espace cartésien à partir des mesures fournies par la boucle de commande interne (20) et un bloc de rétroaction (33, 34) configuré pour réduire à un minimum une erreur ($E_s$, $E_d$) entre les trajectoires imposées et les valeurs estimées, générant de ce fait les valeurs d'articulations de référence ($\dot{\theta}_{ind\_ref}$).

4. Système de commande selon l'une quelconque des revendications précédentes, **caractérisé en ce que** les variables d'espace cartésien comprennent au moins les variables suivantes, garantissant une posture pendant la marche : des coordonnées de référence d'un point fixé à un pied pivotant, pendant une phase d'appui unique de la marche, des rotations angulaires d'attitude du tronc, et des coordonnées cartésiennes du CdG (centre de gravité), obtenues par une commande de prévisualisation afin de garantir que le ZMP (point de moment nul), c'est-à-dire le point auquel la résultante des couples associés à des forces de réaction sur le pied est nulle, est maintenu dans une région de stabilité de posture.

5. Système de commande selon l'une quelconque des revendications précédentes, **caractérisé en ce que** les trajectoires imposées associées aux variables d'espace cartésien sont prédéfinies, en ayant des valeurs nominales.

**6.** Système de commande selon l'une quelconque des revendications 1 à 5, **caractérisé en ce que** les trajectoires imposées associées aux variables d'espace cartésien sont calculées en temps réel sur la base d'un nombre de paramètres de la marche, lesdits paramètres comprenant : la période de temps ($T_{step}$) d'un pas, la durée d'une phase d'appui double de la marche ($t_{ds}$), la distance (A) entre les deux pieds dans le plan frontal, la longueur d'avancement (pas) du CdG (centre de gravité) dans le plan sagittal pendant un pas.

**7.** Système de commande selon l'une quelconque des revendications précédentes, **caractérisé en ce qu'**au moins l'une des variables d'articulations indépendantes comprend une vitesse d'un ou des deux angles d'articulations des genoux ($\vartheta_{knee\_l}$, $\vartheta_{knee\_r}$), et les trajectoires imposées associées sont des trajectoires nominales quasi-arbitraires, le système de commande (12) étant conçu de sorte que lesdites trajectoires nominales quasi-arbitraires ne doivent pas être nécessairement suivies pendant la marche.

**8.** Système de commande selon l'une quelconque des revendications précédentes, **caractérisé en ce que** les trajectoires imposées d'au moins l'une des variables d'articulations indépendantes sont prédéfinies en fonction des valeurs nominales.

**9.** Système de commande selon l'une quelconque des revendications 1 à 7, **caractérisé en ce que** la structure de cadre (3) est conçue pour être accouplée au corps d'un sujet (2) et **en ce que** les trajectoires imposées d'au moins l'une des variables d'articulations indépendantes sont calculées en temps réel sur la base de signaux bioélectriques détectés ($\tau_{EMG}$), indicatifs de mouvements volontaires du sujet (2), de manière à se conformer à ceux-ci.

**10.** Système de commande selon l'une quelconque des revendications précédentes, **caractérisé en ce que** la solution des moindres carrés pondérés envisage l'association à la trajectoire imposée d'au moins l'une des variables d'articulations indépendantes d'un coefficient de pondération, qui est inférieur aux coefficients de pondération associés aux trajectoires imposées des variables d'espace cartésien, atténuant de ce fait une contrainte sur la trajectoire imposée d'au moins l'une des variables d'articulations indépendantes.

**11.** Système de commande selon l'une quelconque des revendications précédentes, **caractérisé en ce que** au moins l'une des variables d'articulations indépendantes comprend une vitesse d'un angle d'articulation de genou ($\vartheta_{knee\_l}$, $\vartheta_{knee\_r}$) ; et dans lequel la boucle de commande externe (30) est configurée pour introduire la matrice jacobienne étendue, lorsqu'il est déterminé que l'angle d'articulation de genou a une relation donnée avec une valeur de seuil, indicative d'une singularité possible pour la cinématique inverse.

**12.** Système de commande selon l'une quelconque des revendications précédentes, **caractérisé en ce que** la structure de cadre (3) est configurée pour être accouplée au corps d'un sujet (2), et comporte au moins une autre articulation, qui n'est pas actionnée par les moyens actionneurs (10) et qui est au moins partiellement actionnée par le sujet, la boucle de commande externe (30) étant configurée pour étendre davantage la matrice jacobienne, en ajoutant également une trajectoire suivie par l'autre articulation en tant qu'autre contrainte dans le système d'équations de la cinématique inverse, reliant l'espace cartésien à l'espace d'articulations.

**13.** Système de commande selon l'une quelconque des revendications précédentes, **caractérisé en ce qu'**il comprend en outre une boucle de commande de couple (48), configurée pour coopérer avec les boucles de commande interne (20) et externe (30), fusionnant de ce fait les commandes de mouvement et de force, afin d'entrer des couples auxiliaires sur des articulations dépendantes de la structure de cadre (3), de commander les forces de réaction de sol et les transitions de poids entre un pied de support et un pied pivotant pendant une phase d'appui double, et de faire face à une commutation à collision d'un appui unique à un appui double.

**14.** Système de commande selon l'une quelconque des revendications précédentes, **caractérisé en ce que** les variables d'articulations indépendantes ($\dot{\theta}_{ind}$) sont des vitesses d'angles d'articulations indépendantes correspondants, et dans lequel la structure de cadre (3) est configurée pour être accouplée au corps d'un sujet (2), le dispositif robotique (1) comprenant des moyens capteurs (14), accouplés au corps du sujet et configurés pour détecter des signaux bioélectriques ($\tau_{EMG}$) indicatifs des couples de sujet ($\tau_{patient}$) au niveau des articulations de la structure de cadre (3), la boucle de commande interne (20) comprenant un étage d'admittance (22), configuré pour commander une conformité présentée par le dispositif robotique (1) au sujet (2) sur la base des signaux bioélectriques détectés en fonction d'une admittance perçue, la structure de cadre (3) comprenant également des angles d'articulations dépendants, qui n'ont pas de mouvement indépendant, les couples de sujet ($\tau_{patient}$) étant mesurés à partir des signaux

bioélectriques ($\tau_{EMG}$) au niveau de toutes les articulations de la structure de cadre sont moyennés, afin de déterminer une admittance équivalente perçue par le sujet (2).

15. Dispositif haptique d'exosquelette (1) comprenant une structure de cadre (3) et des moyens actionneurs (10), accouplés à la structure de cadre (3) et pouvant être utilisés pour provoquer des mouvements d'un nombre d'articulations (7, 8, 9) de celle-ci, **caractérisé en ce qu'**il comprend un système de commande (12) selon l'une quelconque des revendications précédentes.

16. Produit-programme d'ordinateur comprenant des instructions d'ordinateur pour mettre en oeuvre, lorsqu'il est exécuté dans une unité de traitement, le système de commande (12) selon l'une quelconque des revendications 1 à 14.

**FIG. 1**

FIG. 2a

FIG. 2b

FIG. 3

FIG. 4

FIG. 5

FIG. 6

FIG. 7

FIG. 8

FIG. 9

FIG. 10

FIG. 11

FIG. 12

FIG. 13

FIG. 14

TORQUE$_y$ (N·m)

FIG. 15

TORQUE$_{ANKLE\_x}$ (N·m)

FIG. 16

TORQUE$_{ANKLE\_y}$ (N·m)

FIG. 17

TORQUE$_{HIP\_x}$(N·m)

FIG. 18

TORQUE$_{HIP\_y}$ (N·m)

FIG. 19

TORQUE$_{KNEES}$ (N·m)

FIG. 20

FIG. 21

FIG. 22

FIG. 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2238894 A1

- US 7190141 B1

**Non-patent literature cited in the description**

- **I. M. HOROWITZ.** Synthesis of Feedback Systems. Academic Press, 1963
- **B. SICILIANO ; O. KHATIB.** Springer Handbook of Robotics. 2008
- Springer Handbook of Robotics. 2008
- **T. KATAYAMA ; T. OHKI ; T. INOUE ; T. KATO.** Design of an Optimal Controller for a Discrete Time System Subject to Previewable Demand. *International Journal of Control,* 1985, vol. 41 (3), 677-699
- **T. R. KANE ; D. E. LEVINSON.** Dynamics Theory and Applications. McGraw-Hill, 1985
- **YOUNGJIN CHOI ; DOIK KIM ; YONGHWAN OH ; BUM-JAE YOU.** Posture/Walking Control for Humanoid Robot Based on Kinematic Resolution of CoM Jacobian With Embedded Motion. *IEEE TRANSACTIONS ON ROBOTICS,* December 2007, vol. 23 (6), 1285
- **KANE ; LEVISON.** *Dynamics Online: Theory and Implementation with Autolev,* 2000, http://www.autolev.com/index2.html
- **T. KATAYAMA ; T. OHKI ; T. INOUE ; T. KATO.** Design of an Optimal Controller for a Discrete Time System Subject to Previewable Demand. *International Journal of Control,* 1985, vol. 41 (3), 677-699
- **DAVID A. WINTER.** Biomechanics and motor control of human movement. John Wiley & Sons, 2009, 60-64